(19) **Europäisches Patentamt / European Patent Office / Office européen des brevets**

(11) **EP 4 697 019 A1**

(12) **EUROPEAN PATENT APPLICATION**
published in accordance with Art. 153(4) EPC

(43) Date of publication:
**18.02.2026 Bulletin 2026/08**

(21) Application number: 24828308.7

(22) Date of filing: **08.08.2024**

(51) International Patent Classification (IPC):
**G01N 29/024** (2006.01)   **G01N 29/22** (2006.01)
**G01N 29/26** (2006.01)

(52) Cooperative Patent Classification (CPC):
**G01N 29/024; G01N 29/222; G01N 29/262;**
**G01N 29/4436;** G01N 2291/02416; G01N 2291/044

(86) International application number:
**PCT/CN2024/110761**

(87) International publication number:
**WO 2025/255930 (18.12.2025 Gazette 2025/51)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.06.2024 CN 202410766536**

(71) Applicant: **Wuxi Topsound Technology Co., Ltd**
**Huishan Economic Development Zone**
**Wuxi, Jiangsu 214100 (CN)**

(72) Inventors:
• **JIN, Cheng**
  **Wuxi, Jiangsu 214100 (CN)**
• **QU, Rongzhao**
  **Wuxi, Jiangsu 214100 (CN)**

(74) Representative: **Ullrich & Naumann PartG mbB**
**Schneidmühlstrasse 21**
**69115 Heidelberg (DE)**

(54) **SLURRY QUALITY INSPECTION SYSTEM**

(57)   The present application relates to a slurry quality detection system, in particular to an ultrasonic detection system for detecting a quality of a slurry, including: an ultrasonic probe unit, including at least an annular outer probe capable of being sleeved on a slurry conveying pipe and/or an in-pipe probe body assembled in the slurry conveying pipe, and a detection control processor configured with ultrasonic probe array elements to perform ultrasonic circumferential scanning on slurry in the slurry conveying pipe, detecting a quality state of the slurry based on the slurry ultrasonic transmission circumferential scanning information and the slurry ultrasonic reflection circumferential scanning information when the slurry ultrasonic transmission circumferential scanning information and the slurry ultrasonic reflection circumferential scanning information are generated at least based on the annular outer probe, and outputting the quality state of the slurry. According to the technical solution of the present application, the quality of slurry conveyed in the pipeline can be effectively detected, and the feasibility and accuracy of detection are improved.

FIG. 13

EP 4 697 019 A1

**Description**

**FIELD OF THE INVENTION**

The present application relates to an ultrasonic detection system, in particular to a slurry quality detection system, and more specifically, to an ultrasonic detection system for detecting quality of a slurry.

**BACKGROUND OF THE INVENTION**

At present, lithium-ion batteries are widely used in fields such as consumer electronics, automobiles, and clean energy, which has raised higher requirements on a production quality of lithium-ion batteries. In a production process, the lack of effective monitoring may lead to low yield, poor quality and low resource utilization efficiency. Therefore, adopting efficient and rapid battery diagnostic methods is crucial for improving the quality, lifespan, and manufacturing process efficiency of batteries.

In the production process of lithium-ion batteries, slurry preparation is a first process stage. The slurry is conveyed to subsequent processes such as coating after being stirred. Therefore, a quality of the slurry directly affects a quality of the subsequent coating and a performance of finally prepared batteries. It is also an important indicator that determines a cost of the batteries. Thus, the slurry preparation occupies a core position in the production process of lithium-ion batteries.

It can be seen from the above description that a quality detection of the slurry is critical. A purpose of the detection can be to evaluate whether the slurry is suitable for subsequent processes such as coating and whether the slurry is beneficial for a performance of active materials of the batteries. The detection of the slurry may generally includes aspects such as slurry density, internal air content, viscosity, and uniformity of a mixture, among which gas content and solid-liquid ratio are the most concerned.

In the prior art, US20220155262 provides a method for detecting slurry. Specifically, placing a pair of single-element probes or multi-element array probes on both sides of a pipeline through which slurry flows, wherein a probe on one side is used for transmitting, and a probe on the other side is used for receiving. An arrangement of probes on both sides will cause a contact area between the probes and the slurry to be limited. Since a shape the pipeline is cylindrical, when the probes move to a non-central position, most of energy will be reflected at other angles, resulting in inconsistent transmitted signal energy at different positions. Similarly, the energy of a reflected signal received by the probes is also inconsistent. In particular, most of the reflected signals in an edge area are reflected in other directions, resulting in that the probes cannot receive effective echo signals.

From the above description, it can be known by those skilled in the art that although ultrasonic methods can be used to detect the quality of the slurry, how to effectively detect the quality of the slurry conveyed through the pipeline is a technical problem that urgently needs to be solved at present.

SUMMARY

The present application aims to overcome defects in the prior art, and provides a slurry quality detection system which can effectively realize quality detection of slurry conveyed in a pipeline and improve a feasibility and accuracy of the detection.

In a technical solution according to the present application, a slurry quality detection system includes:

an ultrasonic probe unit, including at least an annular outer probe capable of being sleeved on a slurry conveying pipe and/or an in-pipe probe body assembled in the slurry conveying pipe, wherein the annular outer probe includes a plurality of outer probe array elements capable of receiving and transmitting ultrasonic signals, and the outer probe array elements are circumferentially distributed inside the annular outer probe,
the in-pipe probe body includes at least one inner probe array element capable of receiving and transmitting ultrasonic signals, and
a detection control processor electrically connected to the ultrasonic probe unit and configured with ultrasonic probe array elements to perform ultrasonic circumferential scanning on slurry in the slurry conveying pipe, wherein
performing the ultrasonic circumferential scanning on the slurry based on the annular outer probe and/or the in-pipe probe body;
generating slurry ultrasonic transmission circumferential scanning information and/or slurry ultrasonic reflection circumferential scanning information after the ultrasonic circumferential scanning on the slurry is performed; and
detecting a quality state of the slurry based on the slurry ultrasonic transmission circumferential scanning information and the slurry ultrasonic reflection circumferential scanning information when the slurry ultrasonic transmission circumferential scanning information and the slurry ultrasonic reflection circumferential scanning information are generated at least based on the annular outer probe, and outputting the quality state of the slurry.

In some optional implementations, a two-dimensional grayscale image of the slurry may be generated based on the slurry ultrasonic transmission circumferential scanning information or the slurry ultrasonic reflection circumferential scanning information, after the quality state of the slurry is output.

Normal lines of the outer probe array elements inside the annular outer probe each points to a center inside the slurry conveying pipe;

in the ultrasonic circumferential scanning using the annular outer probe, taking a preset number of the outer probe array elements inside the annular outer probe as a sectional scanning outer probe matrix and performing outer probe sectional scanning on the slurry by using the sectional scanning outer probe matrix sequentially, until the ultrasonic circumferential scanning on the slurry is performed by using the annular outer probe, wherein

in each outer probe sectional scanning, configuring all of the outer probe array elements in the sectional scanning outer probe matrix to simultaneously transmit ultrasonic signals to the slurry, and configuring corresponding ones of the outer probe array elements inside the annular outer probe to be in an ultrasonic reception state based on a preset scanning mode, so as to at least receive an ultrasonic transmission signal and generate an ultrasonic outer probe sectional scanning transmission signal; and generating the slurry ultrasonic transmission circumferential scanning information during the ultrasonic circumferential scanning based on all of the ultrasonic outer probe sectional scanning transmission signals.

The preset scanning mode includes a focusing scanning mode and a planar scanning mode;

in the outer probe sectional scanning on the slurry, configuring corresponding ones of the outer probe array elements inside the annular outer probe to be in the ultrasonic reception state based on the focusing scanning mode or the planar scanning mode, wherein

when receiving an ultrasonic signal based on the focusing scanning mode, configuring outer probe array elements in the sectional scanning outer probe matrix and one outer probe array element opposite to the sectional scanning outer probe matrix to be in the ultrasonic reception state, wherein using all of the outer probe array elements in the sectional scanning outer probe matrix to simultaneously receive ultrasonic reflection signals, and generating ultrasonic outer probe sectional scanning reflection signals based on the ultrasonic reflection signals to be received;

generating the slurry ultrasonic reflection circumferential scanning information during the ultrasonic circumferential scanning based on all of the ultrasonic outer probe sectional scanning reflection signals; and

receiving an ultrasonic transmission signal based on the one outer probe array element opposite to the sectional scanning outer probe matrix, and generating an ultrasonic outer probe sectional scanning transmission signal based on the ultrasonic transmission signal to be received.

When receiving the ultrasonic signal based on the planar scanning mode, configuring at least an outer probe array element directly corresponding to the sectional scanning outer probe matrix to be in the ultrasonic reception state, so as to receive the ultrasonic transmission signal by using the outer probe array element in the ultrasonic reception state, and generate the ultrasonic outer probe sectional scanning transmission signal, wherein

in each outer probe sectional scanning, a number of outer probe array elements in the ultrasonic reception state is consistent with that of outer probe array elements in the sectional scanning outer probe matrix, and the outer probe array elements in the ultrasonic reception state are in one-to-one correspondence with outer probe array elements transmitting ultrasonic signals in the sectional scanning outer probe matrix.

The in-pipe probe body includes only one inner probe array element, and when performing the ultrasonic circumferential detectiond based on the in-pipe probe body, configuring the in-pipe probe body to perform circumferential rotation in the slurry conveying pipe so as to perform the ultrasonic circumferential detection based on the circumferential rotation of the in-pipe probe body, wherein

driving the in-pipe probe body to rotate at a preset angle until the circumferential rotation of the in-pipe probe body is performed in the slurry conveying pipe; after each rotation, configuring the in-pipe probe body to perform inner probe sectional scanning, wherein in the inner probe sectional scanning, configuring the in-pipe probe body to transmit an ultrasonic signal, and switching to the ultrasonic reception state after transmitting the ultrasonic signal, so as to receive an ultrasonic reflection signal and generate an ultrasonic inner probe sectional scanning reflection signal by using the in-pipe probe body; and generating the slurry ultrasonic reflection circumferential scanning information during the ultrasonic circumferential scanning based on all of the ultrasonic inner probe sectional scanning reflection signals.

The in-pipe probe body includes a plurality of inner probe array elements circumferentially distributed inside the in-pipe probe body, and the ultrasonic circumferential detection performed based on the in-pipe probe body includes:

taking a preset number of inner probe array elements inside the in-pipe probe body as an sectional scanning inner probe matrix and performing inner probe sectional scanning on the slurry by using the sectional scanning inner probe matrix sequentially, until the ultrasonic circumferential scanning on the slurry is performed by using the in-pipe probe body; in each inner probe sectional scanning, configuring all of inner probe array elements in the sectional scanning inner probe matrix to simultaneously transmit ultrasonic signals to the slurry, and then switching all of the inner probe array elements in the in-pipe probe matrix to be in the ultrasonic reception state to receive ultrasonic reflection signals and generate ultrasonic inner probe sectional scanning reflection signals; and

generating the slurry ultrasonic reflection circumferential scanning information during the ultrasonic circumferential scanning based on all of the ultrasonic inner probe sectional scanning reflection signals.

When performing the ultrasonic circumferential scanning based on the annular outer probe and the in-pipe probe body, configuring the annular outer probe and the in-pipe probe body by the detection control processor to perform bidirectional alternating circumferential scanning, so as to generate the slurry ultrasonic transmission circumferential scanning information and the slurry ultrasonic reflection circumferential scanning information after the bidirectional alternating circumferential scanning, wherein

in the bidirectional alternating circumferential scanning, configuring each the annular outer probe and the in-pipe probe body to be in an ultrasonic primary scanning state, and configuring each the in-pipe probe body and the annular outer probe to be in an ultrasonic auxiliary scanning state, wherein the ultrasonic primary scanning state includes at least an ultrasonic transmission state and an ultrasonic auxiliary reception state, and the ultrasonic auxiliary scanning state includes at least an ultrasonic primary reception state;

configuring the annular outer probe to be in the ultrasonic primary scanning state, and configuring the in-pipe probe body to be in the ultrasonic auxiliary scanning state, so as to perform the outer probe sectional scanning by using the sectional scanning outer probe matrix, wherein

in each outer probe sectional scanning, configuring the sectional scanning outer probe matrix to transmit an ultrasonic signal, and receiving an ultrasonic transmission signal by the in-pipe probe body in the ultrasonic auxiliary scanning state, so as to generate an inner probe ultrasonic sectional scanning transmission signal;

switching the sectional scanning outer probe matrix transmitting the ultrasonic signal to the ultrasonic reception state to generate an outer probe ultrasonic sectional scanning reflection signal based on an received ultrasonic signal;

after the ultrasonic circumferential scanning described above, generating inner probe ultrasonic scanning transmission information based on all of the inner probe ultrasonic sectional scanning transmission signals, and generating outer probe ultrasonic scanning reflection information based on all of the outer probe ultrasonic sectional scanning reflection signals;

configuring the annular outer probe to be in the ultrasonic auxiliary scanning state, and configuring the in-pipe probe body to be in the ultrasonic primary scanning state, so as to perform the inner probe sectional scanning by using the in-pipe probe body, wherein

in each inner probe sectional scanning, configuring the sectional scanning inner probe matrix to transmit the ultrasonic signal, and receiving an ultrasonic transmission signal by the annular outer probe in the ultrasonic auxiliary scanning state, so as to generate an outer probe ultrasonic sectional scanning transmission signal;

configuring each of sectional scanning inner probe matrices transmitting the ultrasonic signal to be in the ultrasonic reception state to generate an inner probe ultrasonic sectional scanning reflection signal based on the received ultrasonic signal;

after the ultrasonic circumferential scanning described above, generating outer probe ultrasonic scanning transmission information based on all of the outer probe ultrasonic sectional scanning transmission signals, and generating inner probe ultrasonic scanning reflection information based on all of the inner probe ultrasonic sectional scanning reflection signals;

generating the slurry ultrasonic transmission circumferential scanning information based on the inner probe ultrasonic scanning transmission information and the outer probe ultrasonic scanning transmission information; and

generating the slurry ultrasonic reflection circumferential scanning information based on the outer probe ultrasonic scanning reflection information and the inner probe ultrasonic scanning reflection information.

A method of the quality state detection on the slurry based on the slurry ultrasonic transmission circumferential scanning information and the slurry ultrasonic reflection circumferential scanning information includes:

sequentially extracting the ultrasonic outer probe sectional scanning transmission signals in the slurry ultrasonic transmission circumferential scanning information, and sequentially extracting the ultrasonic outer probe sectional scanning reflection signals in the slurry ultrasonic reflection circumferential scanning information, wherein the ultrasonic outer probe sectional scanning transmission signals correspond to the ultrasonic outer probe sectional scanning reflection signals;

calculating reflection PPV values of the ultrasonic outer probe sectional scanning reflection signals to be extracted, and transmission PPV values and transmission TOF values of the ultrasonic outer probe sectional scanning transmission signals to be extracted;

when a reflection PPV is less than a reflection PPV threshold and a transmission PPV is greater than a transmission PPV threshold, determining that the slurry is qualified; otherwise, determining that an impurity exists in the slurry; and

when the impurity exists in the slurry and a transmission TOF is greater than a transmission TOF threshold, the impurity is a substance in which sound velocity is lower than that in the slurry, otherwise, the impurity is a substance in which sound velocity is higher than that in the slurry.

A method of the quality state detection on the slurry based on the slurry ultrasonic transmission circumferential scanning information and the slurry ultrasonic reflection circumferential scanning information includes:

extracting inner probe ultrasonic sectional scanning transmission signals in the inner probe ultrasonic scanning transmission information, and sequentially extracting outer probe ultrasonic sectional scanning reflection signals in the outer probe ultrasonic scanning reflection information, wherein the inner probe ultrasonic sectional scanning transmission signals correspond to the outer probe ultrasonic sectional scanning reflection signals;

calculating reflection PPV values of the outer probe ultrasonic sectional scanning reflection signals to be extracted and transmission PPV values and transmission TOF values of the inner probe ultrasonic sectional scanning transmission signals to be extracted;

when a reflection PPV is less than a reflection PPV threshold and a transmission PPV is greater than a transmission PPV threshold, determining that the slurry is qualified; otherwise, determining that an impurity exists in the slurry; and

when the impurity exists in the slurry and a transmission TOF is greater than a transmission TOF threshold, the impurity is a substance in which sound velocity is lower than that in the slurry, otherwise, the impurity is a substance in which sound velocity is higher than that in the slurry.

Calculation of a transmission PPV value of an ultrasonic outer probe sectional scanning transmission signal includes:

performing band-pass filtering on the ultrasonic outer probe sectional scanning transmission signal;

determining a position of a vibration starting point of the ultrasonic outer probe sectional scanning transmission signal;

setting a sampling gate based on the position of the vibration starting point to be determined, wherein the position of the vibration starting point is taken as a starting position of the sampling gate, and a position obtained by intercepting a preset waveform length backwards from the position of the vibration starting point is taken as an ending position of the sampling gate; and

intercepting the ultrasonic probe sectional scanning transmission signal based on the sampling gate to be set to obtain a sampling signal, and calculating a corresponding transmission PPV value based on the sampling signal.

The present application has advantages that the annular outer probe may be sleeved on the slurry conveying pipe through which the slurry flows, so as to use at least the annular outer probe to perform ultrasonic circumferential scanning on the slurry, and at least the slurry ultrasonic transmission circumferential scanning information and the slurry ultrasonic reflection circumferential scanning information are generated after the circumferential scanning, and the slurry quality state can be detected by using the slurry ultrasonic transmission circumferential scanning information and the slurry ultrasonic reflection circumferential scanning information.

Further, the in-pipe probe body can be disposed in the slurry conveying pipe. By coordinating the annular outer probe with the internal probe body, the bidirectional alternating circumferential scanning can be performed. The in-pipe probe body, located inside the slurry, can reduce an impact of a wall of the slurry conveying pipe on signal transmission and reception. Therefore, the quality detection of the slurry conveyed in the pipeline can be effectively realized, and the feasibility and accuracy of the detection can be improved. .

## BRIEF DESCRIPTION OF THE DRAWINGS

FIG. 1 is a schematic diagram of an example operational scenario of a slurry ultrasonic detection according to the present application.

FIG. 2 is an example operational flowchart of the example operational scenario in FIG. 1.

FIG. 3 is a schematic diagram of an annular outer probe according to an embodiment of the present application.

FIG. 4 is a schematic diagram for compensating amplitude intensity of a transmitted signal when the annular outer probe is in a planar scanning mode according to an embodiment of the present application.

FIG. 5 is a schematic diagram of an embodiment of the present application in which the annular outer probe is in a focusing scanning mode.

FIG. 6 is a schematic diagram of another embodiment of the present application in which the annular outer probe is in the focusing scanning mode.

FIG. 7 is a schematic diagram of an embodiment of the present application in which the annular outer probe is in the planar scanning mode.

FIG. 8 is a schematic diagram of an embodiment of the present application in which an in-pipe probe body is disposed in a slurry conveying pipe.

FIG. 9 is a schematic diagram of an embodiment of the present application in which the in-pipe probe body is assembled in the slurry conveying pipe.

FIG. 10 is a schematic diagram of an embodiment of the present application in which the annular outer probe and the in-pipe probe body are both used for ultrasonic detection.

FIG. 11 is a schematic diagram of a container for accommodating the in-pipe probe body in a tube according to an embodiment of the present application.

FIG. 12 is the in-pipe probe body according to an embodiment of the present application.

FIG. 13 is a block diagram of a system for implementing of ultrasonic detection through cooperation of a detection control processor and an ultrasonic probe unit according to an embodiment of the present application.

FIG. 14 is a schematic principle diagram for detecting a quality state of the slurry based on flight time according to an embodiment of the present application.

FIG. 15 is a schematic principle diagram for detecting a quality state of the slurry based on amplitude attenuation information according to an embodiment of the present application.

FIG. 16 is a flowchart for detecting a quality state of the slurry according to an embodiment of the present application.

FIG. 17 is a schematic diagram of a sampling gate disposed according to an embodiment of the present application.

FIG. 18 is a schematic diagram for performing focusing scanning according to an embodiment of the present application.

FIG. 19 is a schematic diagram for generating a two-dimensional grayscale image according to an embodiment of the present application.

Reference numerals indicate: 1. slurry stirring barrel, 2. pre-defoaming conveying pipe, 3. defoaming device, 4. annular outer probe, 5. post-defoaming conveying pipe, 6. secondary defoaming reflow pipe, 7. conveying selection switch, 8. slurry spray head, 9. spraying receptor, 10. outer probe housing, 11. outer probe array element, 12. slurry, 13. in-pipe probe body, 14. container, 15. supporting bracket, 16. inner probe housing, 17. inner probe array element, 18. host machine, 19. PCIE card, 20. FPGA unit, 21. switching device, 22. outer probe transmission circuit, 23. outer probe reception circuit, 24. inner probe transmission circuit, 25. inner probe reception circuit, 26. control device.

## DETAILED DESCRIPTION

The present application will be further described below in details with reference to specific drawings and embodiments.

In order to effectively detect the quality of the slurry 12 conveyed in the pipeline, in one embodiment of the present application, a quality detection system includes:

an ultrasonic probe unit, including at least an annular outer probe 4 sleeved on a slurry conveying pipe and/or an in-pipe probe body 13 assembled in the slurry conveying pipe, wherein,

the annular outer probe 4 includes a plurality of outer probe array elements 11 capable of receiving and transmitting ultrasonic signals, and the outer probe array elements 11 are circumferentially distributed in the annular outer probe 4;

the in-pipe probe body 13 includes at least one inner probe array element 17 capable of receiving and transmitting ultrasonic signals;

a detection control processor electrically connected to the ultrasonic probe unit and configured with ultrasonic probe array elements to perform ultrasonic circumferential scanning on the slurry 12 inside the slurry conveying pipe, wherein

performing the ultrasonic circumferential scanning on the slurry 12 based on the annular outer probe 4 and/or the in-pipe probe body 13;

generating slurry ultrasonic transmission circumferential scanning information and/or slurry ultrasonic reflection circumferential scanning information after the ultrasonic circumferential scanning on the slurry 12 is performed;

when the slurry ultrasonic transmission circumferential scanning information and the slurry ultrasonic reflection circumferential scanning information are generated at least based on the annular outer probe 4, detecting a quality state of the slurry 12 based on the slurry ultrasonic transmission circumferential scanning information and the slurry ultrasonic reflection circumferential scanning information, and outputting the quality state of the slurry 12.

Optionally, in some embodiments, generating a two-dimensional grayscale image of the slurry 12 based on the slurry ultrasonic transmission circumferential scanning information or the slurry ultrasonic reflection circumferential scanning information.

Specifically, the slurry 12 may be a slurry substance for the lithium-ion battery mentioned above, and of course, the slurry 12 may also be other substances having the characteristics of the slurry substance for the lithium-ion battery mentioned above. It can be seen from the above description that the main purpose of the detection on the slurry 12 is to determine whether bubbles or other impurities exist in the slurry 12. Since the ultrasonic is very sensitive to air and has detection effectiveness on the Young's modulus of the impurities, the quality state of the slurry 12 can be detected by using the ultrasonic.

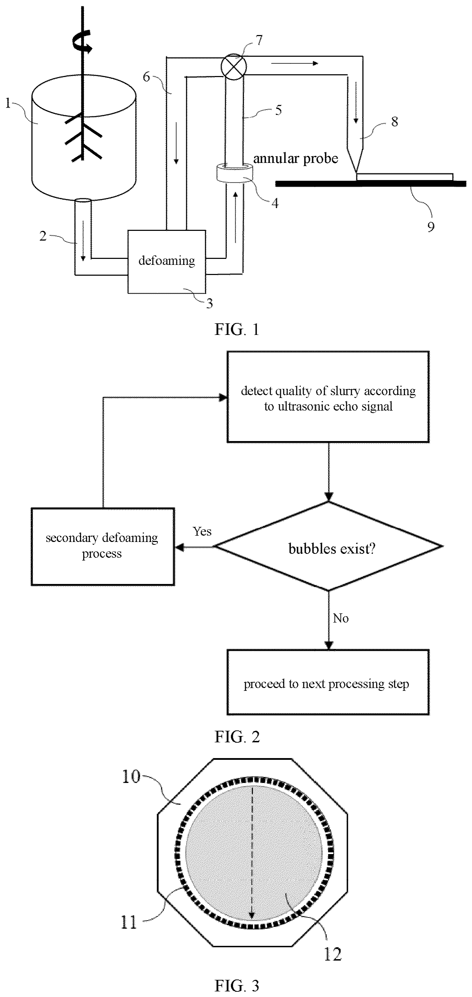

In industrial production, the slurry 12 to be detected generally flows in the slurry conveying pipe. That is, the slurry 12 is conveyed through the slurry conveying pipe. FIG. 1 shows an embodiment of a scenario for the conveyance and ultrasonic detection of the slurry 12. In FIG. 1, the slurry is stirred by using a slurry stirring barrel 1, and the slurry 12 stirred by the slurry stirring barrel 1 is conveyed into a defoaming device 3 through a pre-defoaming conveying pipe 2, so as to be defoamed firstly by using the defoaming device 3. The defoaming device 3 may be implemented in conventional forms that can defoam the slurry 12 output by the slurry stirring barrel 1. Therefore, it is generally assumed that the slurry 12 contains bubbles and/or impurities before entering the defoaming device 3, and the slurry 12 defoamed by the defoaming device 3 is generally assumed to be free of bubbles. Thus, performing the ultrasonic detection on the slurry 12 refers to conducting the ultrasonic detection on the slurry defoamed by the defoaming device 3.

In FIG. 1, the slurry 12 defoamed by the defoaming device 3 enters a post-defoaming conveying pipe 5, and is conveyed to a slurry spray head 8 through the post-defoaming conveying delivery pipe 5 and a conveying selection switch 7. Thereafter, the slurry 12 can be sprayed on a spray receptor 9 by using the slurry spray head 8. Therefore, performing the ultrasonic detection on the slurry 12 refers to conducting the ultrasonic detection on the slurry 12 flowing through the post-defoaming conveying pipe 5. That is, the post-defoaming conveying pipe 5 in FIG. 1 is one embodiment of the slurry conveying pipe of the present application. The annular outer probe 4 in FIG. 1 is sleeved on the post-defoaming conveying pipe 5. Furthermore, in FIG. 1, the conveying selection switch 7 is futther connected to the defoaming device 3 through a secondary defoaming reflow pipe 6. When it is determined that bubbles exist in the slurry 12 by using the annular outer probe 4, the slurry 12 may be selectively returned to the defoaming device 3 through the conveying selection switch 7 for secondary defoaming, and the specific operational flow is shown in FIG. 2.

The conveying selection switch 7 may be implemented in a conventional form. When the slurry 12 is of another type, a corresponding slurry conveying pipe may be obtained according to a corresponding scenario. Thus, the annular outer probe 4 is sleeved on the slurry conveying pipe to perform the ultrasonic detection on the slurry 12, and the specific implementation can be selected or determined based on an actual scenario or the like.

Generally, the slurry conveying pipe is a cylindrical pipe, and thus the annular outer probe 4 can be conveniently sleeved on the slurry conveying pipe. An inner diameter of the annular outer probe 4 is slightly larger than an outer diameter of the slurry conveying pipe. The annular outer probe 4 is fixed on an outer surface of the slurry conveying pipe along a cross section of the slurry conveying pipe. When the slurry is subjected to the ultrasonic detection, it is not necessary to move the annular outer probe 4, but a material such as a coupling material, a liquid medium or an acoustic guide rubber pad has to be filled between the annular outer probe 4 and an outer wall of the slurry conveying pipe. A specific type of the filling material can be selected as required to ensure that the annular outer probe 4 can be used for performing the ultrasonic detection on the slurry 12 inside the slurry conveying pipe.

In order to effectively perform the ultrasonic detection on the slurry 12, the annular outer probe 4 includes a plurality of outer probe array elements 11 which are units capable of receiving and transmitting ultrasonic waves. In specific implementation, the annular outer probe 4 may further include an ultrasonic probe, an outer probe transmission circuit 22 for driving the ultrasonic probe to transmit ultrasonic signals outwards, and an outer probe reception circuit 23 for driving the ultrasonic probe to receive ultrasonic signals. The ultrasonic probe, the outer probe transceiver circuit 22, and the outer probe reception circuit 23 may be implemented in conventional forms. A connection and cooperation manner between the outer probe array elements 11 and the ultrasonic probe, the outer probe transceiver circuit 22 and the outer probe reception circuit 23 is consistent with a existing manner, so that each of the outer probe array elements 11 can transmit ultrasonic signals outwards and receive ultrasonic signals.

FIG. 3, FIG. 5, FIG. 6 and FIG. 7 show an embodiment of the annular outer probe 4, where the annular outer probe 4 includes an outer probe housing 10 in which the plurality of outer probe array elements are distributed. The outer probe array elements 11 in the outer probe housing 10 generally be implemented in the same form, that is, each of the outer probe array elements 11 can transmit an ultrasonic signal, and receive an ultrasonic signal after being switched.

A shape of the main body of the outer probe housing 10 is annular, and a central region of the outer probe housing 10 is hollow so as to be sleeved on the slurry conveying pipe. The outer probe housing 10 is in coaxial distribution with the slurry conveying pipe when sleeved thereon. At this time, any one of the outer probe array elements 11 may transmit an ultrasonic signal to a pipe wall directly corresponding to the outer probe array element 11. The ultrasonic signal may be formed as a transmission signal after passing through the slurry 12, and the ultrasonic signal reflected by the slurry 12 may be formed as a reflection signal. Both the transmission signal and the reflection signal may be received by at least the annular outer probe 4. Certainly, the transceiving state of each of the outer probe array elements 11 may be configured by the detection control processor.

When the outer probe array elements 11 are circumferentially distributed inside the outer probe housing 10, the outer probe array elements 11 are generally and preferably in a uniformly symmetric distribution state in the outer probe housing 10. That is, the outer probe array elements 11 have a central symmetric state in the outer probe housing 10. Certainly, the outer probe array elements 11 may have other circumferential distribution forms. Since the outer probe array elements 11 are circumferentially distributed, the outer probe array elements 11 are circumferentially distributed outside the slurry conveying pipe after sleeved thereon. Thus, the ultrasonic circumferential detection on the slurry 12 may be performed by using the circumferentially distributed outer probe array elements 11 while the annular outer probe 4 is kept fixed.

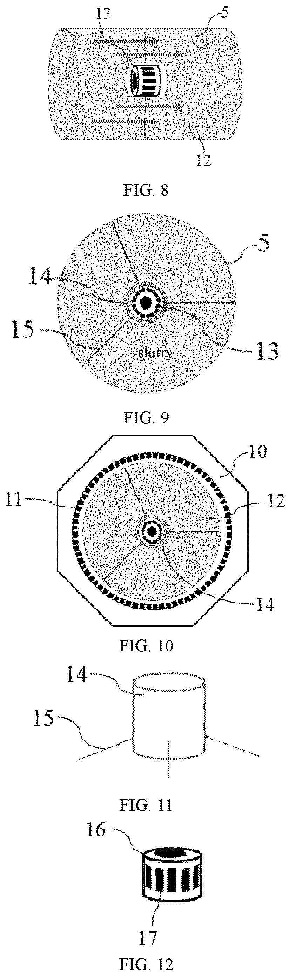

In an embodiment of the present application, an in-pipe probe body 13 may further be disposed in the slurry conveying pipe. Generally, the in-pipe probe body 13 and the slurry conveying pipe where the in-pipe probe body 13 is located are distributed coaxially. Certainly, the in-pipe probe body 13 disposed in the slurry conveying pipe should not affect the flow of the slurry 12 in the slurry conveying pipe, as shown in FIG. 8 and FIG. 9.

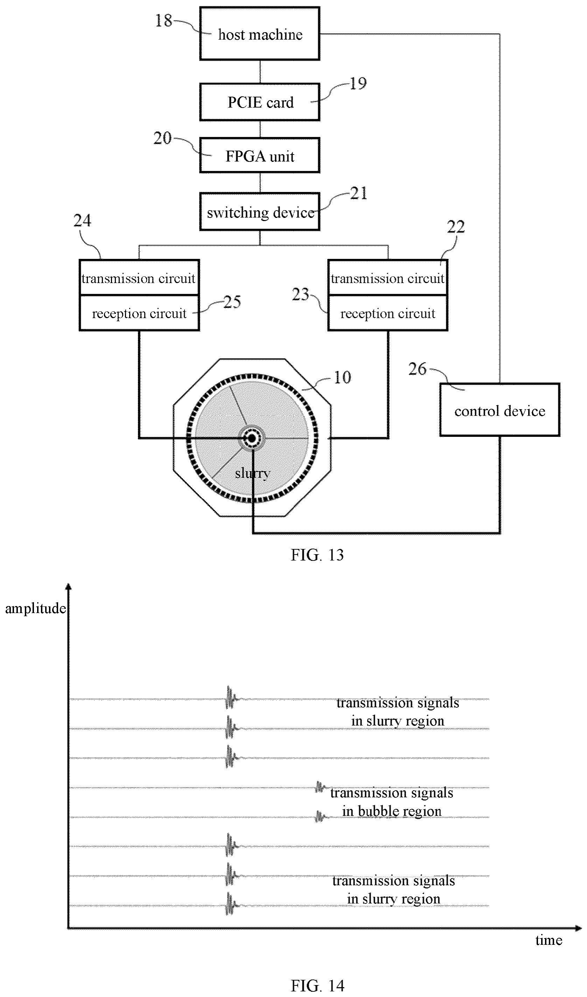

In a specific implementation, the in-pipe probe body 13 includes at least one inner probe array element 17. The inner probe array element 17 inside the in-pipe probe body 13 may be configured by the detection control processor to be in an ultrasonic receiving state or an ultrasonic transmission state. The inner probe array element 17 may have the same form as the outer probe array element 11. FIG. 13 shows a schematic diagram of an embodiment system in which the in-pipe probe body 13 and the annular outer probe 4 are configured by the detection control processor to perform the ultrasonic detection. In order to satisfy operational requirements, the in-pipe probe body 13 generally further includes an ultrasonic probe, an inner probe transmission circuit 24, and an inner probe reception circuit 25, which is similar to the annular outer probe 4. The ultrasonic probe, the inner probe transmission circuit 24 and the inner probe reception circuit 25 may be implemented in conventional forms. A connection and cooperation between the inner probe array element 17 and the ultrasonic probe, the inner probe transmission circuit 24 and the inner probe reception circuit 25 is consistent with existing ones, so that the inner probe array element 17 may be configured to transmit or receive ultrasonic waves.

When the annular outer probe 4 and the in-pipe probe body 13 are both disposed inside the slurry conveying pipe, the in-pipe probe body 13 is generally required to have the same ultrasonic circumferential detection capability as the annular outer probe 4 during the ultrasonic circumferential scanning of the slurry 12.

Therefore, the ultrasonic probe unit may include only the annular outer probe 4 or the in-pipe probe body 13, or both of the annular outer probe 4 and the in-pipe probe body 13. The annular outer probe 4 generally includes a plurality of outer probe array elements 11, and the in-pipe probe body 13 may include at least one inner probe array element 17. A manner of performing the ultrasonic circumferential scanning based on the in-pipe probe body 13 is different according to a number of inner probe array elements 17 included in the in-pipe probe body 13, which will be explained in detail below. When there are a plurality of inner probe array elements 17 included in the in-pipe probe body 13, the number of the inner probe array elements 17 may be equal to or less than that of the outer probe array elements 11, which may be selected as required.

It can be seen from the above description that the ultrasonic circumferential scanning may be performed on the slurry 12 based on the annular outer probe 4 and/or the in-pipe probe body 13. During the ultrasonic circumferential scanning, there may be a transmission signal and an ultrasonic reflection signal. Thus, the slurry ultrasonic transmission circumferential scanning information and/or the slurry ultrasonic reflection circumferential scanning information may be generated after the ultrasonic scanning.

In an embodiment of the present application, when the slurry ultrasonic transmission circumferential scanning information and the slurry ultrasonic reflection circumferential scanning information are generated based on the annular outer probe 4, a quality state detection is performed on the slurry 12 based on the slurry ultrasonic transmission circumferential scanning information and the slurry ultrasonic reflection circumferential scanning information, and a quality state of the slurry 12 is output. The quality state of the slurry 12 is generally qualified or unqualified. It can be seen from the above description that the quality state detection on the slurry 12 may include detecting for a presence of impurities such as bubbles. If no impurities such as bubbles exist, the quality of the slurry 12 may be considered qualified, otherwise, the quality of the slurry 12 may be considered unqualified.

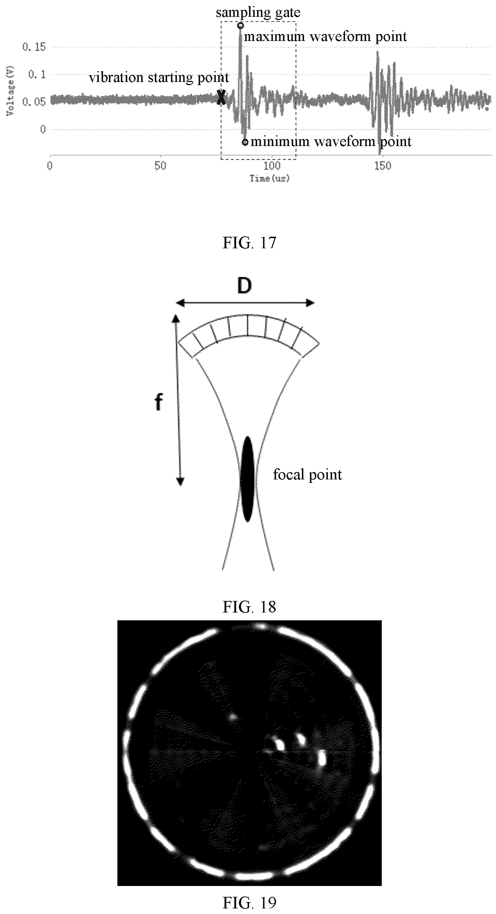

In some further embodiments, a two-dimensional grayscale image of the slurry 12 is generated based on the ultrasonic reflection circumferential scanning information of the slurry after the quality state of the slurry 12 is output. FIG. 19 shows an embodiment of generating a two-dimensional grayscale image of the slurry 12. The two-dimensional grayscale image to be generated can be used to intuitively understand the internal condition of the slurry. Specifically, if the slurry 12 does not contain any impurities, the two-dimensional grayscale image to be generated will appear with uniform grayscale. If the slurry 12 contains other impurities such as bubbles, a signal amplitude will change when the ultrasonic wave encounters these impurities, resulting in abnormal grayscale areas in the two-dimensional grayscale image to be generated. Thus, inspectors can visually determine whether there are impurities and other abnormalities in the slurry 12 at this time.

Manners and processes of generating the slurry ultrasonic transmission circumferential scan information and/or the slurry ultrasonic reflection circumferential scan information and detecting the quality state of the slurry 12 will be described below.

In an embodiment of the present application, normal lines of the outer probe array elements 11 in the annular outer probe 4 each points to the center in the slurry conveying pipe;

in the ultrasonic circumferential scanning using the annular outer probe 4, taking a preset number of outer probe array elements 11 inside the annular outer probe 4 as a sectional scanning outer probe matrix and performing outer probe sectional scanning on the slurry using the sectional scanning outer probe matrix sequentially, until the ultrasonic circumferential scanning on the slurry is performed by using the annular outer probe, wherein

in each outer probe sectional scanning, configuring all of the outer probe array elements 11 in the sectional scanning outer probe matrix to simultaneously transmit ultrasonic signals to the slurry, and configuring corresponding ones of the outer probe array elements 11 inside the annular outer probe 4 to be in an ultrasonic receiving state based on a preset scanning mode, so as to at least receive an ultrasonic transmission signal and generate an ultrasonic outer probe sectional scanning transmission signals; and generating the slurry ultrasonic transmission circumferential scanning information during the ultrasonic circumferential scanning based on all of the ultrasonic outer probe sectional scanning transmission signals.

Specifically, when the annular outer probe 4 is used for the ultrasonic circumferential scanning, it specifically means that the annular outer probe 4 is in an active state of operation, and the in-pipe probe body 13 may not be disposed in the slurry conveying pipe or configured in an inactive state of operation.

In an embodiment of the present application, when the annular outer probe 4 is used to perform the ultrasonic circumferential detection on the slurry 12, the circumference may be divided into a plurality of sections. That is, a form of the circumferential scanning detection is formed through a synthesis of the plurality of sections. Therefore, during the ultrasonic circumferential detection, corresponding ones of the outer probe array elements 11 may be selected to perform the sectional scanning on the slurry 12 in the slurry conveying pipe until the ultrasonic circumferential scanning on the slurry 12 is completed by using the annular outer probe 4. Specifically, an angle of the sectional scanning may be selected as required, so as to satisfy requirements of ultrasonic detection while the slurry 12 flows in the slurry conveying pipe.

In specific implementations, a number of the outer probe array elements 11 in the sectional scanning outer probe matrix may be selected as required, for example, it may be determined according to a pipe diameter of the slurry conveying pipe and a flow velocity of the slurry 12 flowing through the slurry conveying pipe. For example, the annular outer probe 11 includes 128 outer probe array elements 11 distributed uniformly and circumferentially. The number of the outer probe array elements 11 included in the sectional scanning outer probe matrix may be selected as four, eight, sixteen or other numbers, and a specific number may be selected as required. Generally, when the sectional scanning outer probe matrix includes a plurality of outer probe array elements 11 adjacent to each other in the same area and continuously arranged in sequence. The number of the outer probe array elements 11 in the sectional scanning outer probe matrix keeps consistent for each outer probe sectional scanning.

In the outer probe sectional scanning, configuring all of the outer probe array elements 11 in the sectional scanning outer probe matrix to transmit ultrasonic signals simultaneously. For example, when the sectional scanning outer probe matrix includes eight outer probe array elements 11, the eight outer probe array elements 11 transmit ultrasonic signals simultaneously. However, a reception and generation of the ultrasonic sectional scanning transmission signal are generally related to a preset scanning mode. The manner of generating the ultrasonic sectional scanning transmission signal/reflection signal is specifically described below with reference to the preset scanning mode.

It can be seen from the above description that the ultrasonic circumferential detection includes a plurality of outer probe sectional scannings. During each outer probe sectional scanning, at least an ultrasonic transmission signal is received and an ultrasonic outer probe sectional scanning transmission signal is generated based on the annular outer probe 4. At the same time, the slurry ultrasonic transmission circumferential scanning information during the ultrasonic circumferential scanning is generated based on all of the ultrasonic outer probe sectional scanning transmission signals.

In an embodiment of the present application, the preset scanning mode includes a focusing scanning mode and a planar scanning mode;

in the outer probe sectional scanning on the slurry 12, corresponding ones of the outer probe array elements 11 in the annular outer probe 4 may be configured to be in an ultrasonic reception state based on the focusing scanning mode or the planar scanning mode, wherein

when receiving ultrasonic signals based on the focusing scanning mode, configuring the outer probe array elements 11 included in the sectional scanning outer probe matrix and one of the outer probe array elements 11 opposite to the sectional scanning outer probe matrix to be in the ultrasonic reception state, wherein

receiving ultrasonic reflection signals simultaneously by using all of the outer probe array elements 11 included in the sectional scanning outer probe matrix, and generating ultrasonic outer probe sectional scanning reflection signals based on the ultrasonic reflection signals to be received;

receiving an ultrasonic transmission signal based on one outer probe array element 11 opposite to the sectional scanning outer probe matrix, and generating an ultrasonic outer probe sectional scanning transmission signal based on the ultrasonic transmission signal to be received.

In a specific implementation, the preset scanning mode includes a focusing scanning mode and a planar scanning mode. However, in the outer probe sectional scanning, the outer probe array elements 11 are only be configured to receive ultrasonic signals based on either the focusing scanning mode or the planar scanning mode. In other words, when performing the ultrasonic circumferential scanning on the slurry 12, it is generally selected and maintained to be in either the focused scanning mode or the planar scanning mode.

For the focusing scanning mode, when performing ultrasonic circumferential scanning by using the annular outer probe 4, the slurry ultrasonic reflection circumferential scanning information may be generated in addition to the slurry ultrasonic transmission circumferential scanning information. Specifically, in order to receive the ultrasonic transmission signal, at least one outer probe array element 11 is configured to be in the ultrasonic reception state. However, the outer probe array element 11 in the ultrasonic reception state and receiving the ultrasonic transmission signal needs to be located directly opposite to the sectional scanning outer probe matrix.

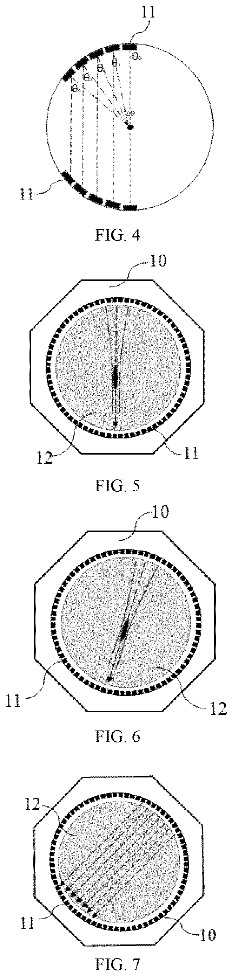

FIG. 5 and FIG. 6 show an embodiment of the focusing scanning mode. In a specific implementation, corresponding ones of the outer probe array elements 11 may be selected and configured to receive the transmission signal according to the number of the inner probe array elements 11 included in the sectional scanning outer probe matrix. Thus, an ultrasonic transmission signal may be received during each outer probe sectional scanning, and an ultrasonic sectional scanning transmission signal may be generated based on the ultrasonic transmission signal to be received. In other words, the ultrasonic sectional scanning transmission signal may be directly formed in the ultrasonic reception state.

FIG. 18 shows a sound field of an embodiment in which focusing scanning is performed by using the sectional scanning outer probe matrix. In the focusing scanning, an imaging effect is optimal at a focal point. A position of the focal point in the slurry conveying pipe may be set according to detection requirements for the slurry 12, and the number of the probe array elements 11 included in the sectional scannig outer probe matrix may be calculated according to a value of F.

When performing the focusing scanning based on the sectional scanning outer probe matrix, F = f/D, wherein D is an aperture size, which is a size of arc surfaces formed by all of the outer probe array elements 11 included in the sectional scanning outer probe matrix, with a center of the annular outer probe 4 as the center of a circle, and f is a focal length. Considering that the signal is optimal at a focal position, the focal position is generally arranged at a middle position between a pipe wall of the slurry conveying pipe and a center of the pipe wall, which is corresponding to one-quarter position of the diameter of the slurry conveying pipe. The value of F is usually set to 3 or 4. The number of the outer probe array elements 11 included in the sectional scanning outer probe matrix may be determined after the value of F and the focal length f are determined. In a specific implementation, after the number of the outer probe array elements 11 included in the sectional scanning outer probe matrix is determined, corresponding ones of the outer probe array elements 11 may be selected to receive transmission signals according to the focal point and focal length to be set.

When performing the outer probe sectional scanning after the sectional scanning outer probe matrix is selected based on the focusing scanning mode, the outer probe array elements 11 included in the sectional scanning outer probe matrix are configured in the ultrasonic transmission state to transmit ultrasonic signals to the slurry 12. Thereafter, the outer probe array elements 11 included in the sectional scanning outer probe matrix are switched to be in the ultrasonic reception state, and one outer probe array element 11 directly corresponding to the sectional scanning outer probe matrix is also configured to be in the ultrasonic reception state. At this time, the outer probe array elements 11 included in the sectional scanning outer probe matrix are used to receive the reflection signals, and the outer probe array element 11 directly corresponding to the sectional scanning outer probe matrix is used to receive the transmission signal. Certainly, when the ultrasonic signal is transmitted, the outer probe array element 11 receiving the transmission signal may be configured in the ultrasonic reception state in which the transmission signal can be effectively received.

As can be seen from the above description, since only one outer probe array element 11 is used to receive the transmission signal during each outer probe sectional scanning, the ultrasonic outer probe sectional scanning transmission signal is generated based on the ultrasonic transmission signal to be received. However, the plurality of outer probe array elements 11 are used to receive the reflection signals, that is, there will be a plurality of ultrasonic reflection signals. In a specific implementation, an ultrasonic outer probe sectional scanning reflection signal may be generated based on the plurality of ultrasonic reflection signals through a beamforming method commonly used in the technical field. The method and process of the beamforming of the plurality of ultrasonic reflection signals may be consistent with the existing ones through which the ultrasonic outer probe sectional scanning reflection signal can be formed.

Further, one ultrasonic outer probe sectional scanning transmission signal and one corresponding ultrasonic outer probe sectional scanning reflection signal can be obtained in each outer probe sectional scanning. And, a plurality of ultrasonic outer probe sectional scanning transmission signals and a plurality of ultrasonic outer probe sectional scanning reflection signals can be obtained when the circumferential scanning is completed. Generally, the numers of the ultrasonic outer probe sectional scanning transmission signals and the ultrasonic outer probe sectional scanning reflection signal are consistent with the number of the outer probe array elements 11 included in the annular outer probe 4. For example, when the annular outer probe 4 includes 128 outer probe array elements, 128 ultrasonic outer probe sectional scanning transmission signals and 128 ultrasonic outer probe sectional scanning reflection signals can be obtained after the circumferential scanning is completed. That is, each outer probe array element 11 is generally configured to receive the ultrasonic transmission signal once.

Therefore, the slurry ultrasonic transmission circumferential scanning information is formed based on the 128 ultrasonic outer probe sectional scanning transmission signals, and the slurry ultrasonic reflection circumferential scanning information is formed based on the 128 ultrasonic outer probe sectional scanning reflection signals. At this time, a quality state detection may be performed on the slurry 12 by using the slurry ultrasonic transmission circumferential scanning information and the slurry ultrasonic reflection circumferential scanning information. Meanwhile, a two-dimensional grayscale image of the slurry 12 may be generated by using the slurry ultrasonic reflection circumferential scanning information.

In the focusing scanning mode, for two adjacent sectional scans, when the two sectional scans are performed, a difference between the sectional scanning outer probe matrices is one outer probe array element 11. For example, when clockwise outer probe sectional scanning is performed, there is only one different outer probe array element 11 in the sectional scanning outer probe matrices of the two sectional scans. That is, the outer probe array element 11 at an edge of the sectional scanning outer probe matrix of a previous sectional scan does not participate in a next sectional scan. Certainly, the outer probe array elements 11 in the sectional scanning outer probe matrices in two sectional scans may be selected as required, so that the ultrasonic circumferential scanning can be performed on the slurry 12 and the accuracy of ultrasonic scanning detection can be satisfied.

In an embodiment of the present application, when receiving the ultrasonic signal based on the planar scanning mode, configuring at least the outer probe array element 11 directly corresponding to the sectional scanning outer probe matrix to be in the ultrasonic reception state. Thus, the ultrasonic transmission signal may be received by the outer probe array element 11 in the ultrasonic reception state, and the ultrasonic outer probe sectional scanning transmission signal may be generated.

The number of the outer probe array elements 11 in the ultrasonic reception state is consistent with that of the outer probe array elements 11 included in the sectional scanning outer probe matrix for each outer probe sectional scan. Also, the outer probe array elements 11 in the ultrasonic reception state are in one-to-one correspondence with the outer probe array elements 11 transmitting ultrasonic signals included in the sectional scanning outer probe matrix.

FIG. 7 shows an embodiment of the planar scanning mode, which is different from the focusing scanning mode in that the number of the outer probe array elements 11 in the ultrasonic reception state is consistent with that of the outer probe array elements 11 included in the sectional scanning outer probe matrix, and one ultrasonic sectional scanning transmission signal may be formed by using the ultrasonic transmission signal received by each outer probe array element 11. Thus, in the planar scanning mode, a plurality of ultrasonic sectional scanning transmission signals may be formed in each sectional scanning.

In a specific implementation, corresponding ones of the outer probe array elements 11 may be selected and configured to be in the ultrasonic reception state according to the number of the outer probe array elements 11 included in the sectional scanning outer probe matrix and a distribution of the outer probe array elements 11. A case of the outer probe array elements 11 in the outer probe matrices of two adjacent sectional scans in the planar scanning mode may be consistent with a case of that in two adjacent sectional scans in the focusing mode. That is, only one outer probe array element 11 is adjusted or replaced according to a sequence of the sectional scans. At this time, the outer probe array elements 11 in the ultrasonic receiving state may be selected correspondingly.

The planar scanning mode is similar to CT tomography, all of the outer probe array elements 11 in the sectional scanning outer probe matrix transmit ultrasonic signals into the slurry conveying pipe. A pair of outer probe array elements 11 are opposite to each other in a direction perpendicular to the pipeline, and other array elements may perform different transmission and deflection according to the array elements. As shown in FIG. 4, assuming that one annular outer probe 4 includes 128 outer probe array elements 11, an angle of every two adjacent array elements is $\Delta\theta=360/128$, deflection angles $\theta_0=0$, $\theta_1=\Delta\theta$, ... ,$\theta_n=n*\Delta\theta$, and the deflection angle cannot be arbitrarily large, so as to avoid a generation of grating lobes, and a constraint condition is:

$$d \geq \frac{\lambda}{1+|\sin\theta_{max}|}$$

wherein $\lambda$ is a wavelength of the transmission ultrasonic signal, and d is a distance between two outer probe array elements 11. Therefore, a maximum deflection angle is constrained according to the distance d and the wavelength $\lambda$. If the maximum deflection angle is exceeded, the number of the outer probe array elements 11 included in the sectional scanning outer probe matrix may be limited.

In a specific implementation, there are N sets of ultrasonic outer probe sectional scanning transmission signals in the ultrasonic circumferential scanning in the planar scanning mode. A number of ultrasonic outer probe sectional scanning transmission signals in each set is consistent with the number of the outer probe array elements 11 included in the sectional scanning outer probe matrix, and N is the number of the outer probe array elements 11 in the annular outer probe 4. The slurry ultrasonic transmission circumferential scanning information may be formed based on the N sets of ultrasonic outer probe sectional scanning transmission signals.

Different from the focusing mode, the ultrasonic reflection signal is not receive in the planar scanning mode. The two-dimensional grayscale image may be reconstructed by using a CT back projection reconstruction method based on the slurry ultrasonic transmission circumferential scanning information and facilitates a convenient observation inside the slurry 12, as shown in FIG. 19. Specifically, The method and process for reconstructing or forming the two-dimensional grayscale image by using the CT back projection reconstruction method may be consistent with those in the prior art. Certainly, the two-dimensional grayscale image may also be reconstructed by using other methods, which may be specifically selected as required.

In the planar scanning, each of the transmission signals has different traveling distance. Except that only a connection line of a pair of the outer probe array elements 11 is perpendicular to the pipe wall of the slurry conveying pipe, other acoustic wave incident angles with respect to the slurry conveying pipe are non-zero. Thus, the energy will be lost to varying degrees, and the energy of the transmission signal received by the outer probe array element 11 with a non-zero incident angle needs to be compensated differently, thereby ensuring that an amplitude of the transmission signal received by each outer probe array element 11 is consistent, avoiding deviation in the two-dimensional grayscale image to be reconstructed when impurities are present in the slurry 12, which may affect an observation and judgment using the two-dimensional grayscale image.

When compensating the amplitude of the transmission signal, one feasible implementation method is as follows: filling a slurry barrel with silicone oil, standing until no bubble exists, and dividing the outer probe array elements 11 in the annular outer probe 4 into two groups, one group of outer probe array elements 11 transmitting signals to an opposite side simultaneously, and the other group of outer probe array elements 11 receiving ultrasonic signals. At this time, the amplitude of the transmission signal received will be different. Taking an amplitude of a signal incident at a 0-degree angle as a reference, considering that the attenuation of the ultrasonic energy by the slurry 12 is linearly related to a path length ofan ultrasonic propagation, and the following formula is shown specifically.

$$A_{tt} = \frac{\ln(A_{Tx}) - \ln(A_{Rx})}{L}$$

Wherein $A_{tt}$ is an attenuation coefficient, $A_{Tx}$ is an amplitude of a transmission ultrasonic signal, $A_{Rx}$ is an amplitude of a received transmission signal, and L is a length of a propagation path of the ultrasonic signal.

Therefore, compensation coefficients of the amplitudes of other signals incident at non-zero angles may be calculated according to the above formula. For example, an amplitude A of the transmission signal may be measured in water in advance, and the amplitude is mainly related to an intensity of a transmission voltage. The transmission signal received by a reference array element has an amplitude of $A_{base}$ and a path length of $l1$. The transmission signal received by the adjacent array element has an amplitude of $A_{real}$ and the path of $l2$, and a compensation gain coefficient G of the array element may be obtained according to that each path has an equal attenuation coefficient:

$$\begin{cases} \frac{\ln(A) - \ln(A_{base})}{l1} = \frac{\ln(A) - \ln(A_{theory})}{l2} \\ G = \frac{A_{theory}}{A_{real}} \end{cases}$$

In a specific implementation, after calculations of all array elements are completed, a compensation gain coefficient curve is generated. In actual compensation, amplitude compensation may be directly performed on each transmission signal by using a gain curve in a lookup table manner. For example, the transmission signal collected is multiplied by a corresponding gain value which may be selected from the gain curve according to a position of the current array element and a position of the array element incident at the 0-degree angle.

In the compensation for the transmission signal, two groups of the outer probe array elements 11 in the annular outer probe 4 have the same number of the outer probe array elements 11. For example, when there are 128 outer probe array elements 11 in the annular outer probe 4, the number of the outer probe array elements 11 in each group is 64. A reference array element is the outer probe array element 11 where the signal is incident at the 0-degree angle. A correspondence between the position of the outer probe array element 11 and the compensation gain coefficient curve may be determined according to the position of the reference array element incident at the 0-degree angle, so that a corresponding compensation gain coefficient curve may be obtained for the determined annular outer probe 4. Certainly, the amplitude compensation of the transmission signal in the planar scanning mode may also be achieved in other manners, and the specific manner may be selected as required to satisfy the accuracy of ultrasonic detection on the slurry 12.

In addition, the ultrasonic circumferential scanning may be performed in a clockwise or counterclockwise manner, no matter in the focusing scanning mode or the planar scanning mode. As shown in the embodiments of FIGS. 5 and 6, an embodiment in which the clockwise scanning is performed is illustrated. In the planar scanning mode, there may be only one different outer probe array element 11 in the sectional scanning outer probe matrices in two adjacent outer probe sectional scans, which is consistent with that in the focusing scanning mode, and for details, reference may be made to the foregoing descriptions.

In an embodiment of the present application, only one inner probe array element 17 is included in the in-pipe probe body 13. When performing the ultrasonic circumferential detection based on the in-pipe probe body 13, configuring the in-pipe probe body 13 to rotate circumferentially in the slurry conveying pipe to perform the ultrasonic circumferential detection based on the circumferential rotation thereof, wherein

driving the in-pipe probe body 13 to rotate at a preset angle until the circumferential rotation of the in-pipe probe body is performed in the slurry conveying pipe; configuring the in-pipe probe body 13 to perform an inner probe sectional scanning after each rotation, wherein in the inner probe sectional scanning, configuring the in-pipe probe body 13 to transmit the ultrasonic signal, and switching the in-pipe probe body 13 to be in an ultrasonic reception state after transmitting the ultrasonic signal so as to receive an ultrasonic reflection signal and generate an ultrasonic inner probe sectional scanning reflection signal; generating the slurry ultrasonic reflection circumferential scanning information during the ultrasonic circumferential scanning based on all of the ultrasonic inner probe sectional scanning reflection signals.

It can be seen from the above description that the in-pipe probe body 13 may includes only one inner probe array element 17. When the in-pipe probe body 13 is used to perform the ultrasonic circumferential scanning, the in-pipe probe body 13 needs to have a capability to rotate circumferentially in the slurry conveying pipe. In other word, the ultrasonic circumferential scanning may be performed by using the rotation of the in-pipe probe body 13 in the slurry conveying pipe. During the circumferential scanning, the in-pipe probe body 13 may be configured to rotate, and the inner probe array element 17 is configured to transmit an ultrasonic signal and receive a reflected signal formed through the slurry 12 during the rotation. When the in-pipe probe body 13 completes circumferential rotation, the inner probe array element 17 completes the transmission of the ultrasonic signal and the reception of the reflection signal during the circumferential motion process.

The manner in which the in-pipe probe body 13 rotates circumferentially in the slurry delivery pipe may be a conventional manner, such as being driven by a motor. Certainly, it is still necessary to ensure that the flow of slurry 12 in the slurry conveying pipe cannot be affected. During the ultrasonic circumferential scanning, the in-pipe probe body 13 needs to be configured to rotate at a preset angle, such as rotating 10° each time. The preset angle may be determined so that the ultrasonic detection on the slurry 12 can be performed while the slurry 12 flows in the slurry conveying pipe. Of course, an inner probe sectional scanning may be performed based on the ultrasonic scanning at each preset angle.

Since the in-pipe probe body 13 includes only one inner probe array element 17, the inner probe array element 17 needs to be used for transmitting the ultrasonic signal and receiving the reflection signal. Generally, in a process that the in-pipe probe body 13 rotates at the preset angle, the inner probe array element 17 firstly transmits the ultrasonic signal and then switches to a reception state to receive the reflection signal. Thus, the in-pipe probe body 13 is used for receiving and forming the ultrasonic inner probe sectional scanning reflection signal. The slurry ultrasonic reflection circumferential scanning information during the ultrasonic circumferential scanning is generated based on all of the ultrasonic inner probe sectional scanning reflection signals.

In a specific implementation, the slurry ultrasonic reflection circumferential scanning information generated when the in-pipe probe body 13 operates alone may generally be used to reconstruct and generate the two-dimensional grayscale image. The specific manner and process of reconstructing and generating the two-dimensional grayscale image may refer to the above description, that is, the two-dimensional grayscale image may be used to directly observe the interior of the slurry 12. Compared to the aforementioned method of generating the two-dimensional grayscale image, the two-dimensional grayscale image generated in this way does not require the ultrasonic signal to penetrate the wall of the slurry delivery pipe, avoiding an influence of the pipe wall. This means that the signal energy is not lost, and thus the two-dimensional grayscale image generated in this way better represents the interior of the slurry 12.

In an embodiment of the present application, the in-pipe probe body 13 includes a plurality of inner probe array elements 17 circumferentially distributed therein. The ultrasonic circumferential scanning based on the in-pipe probe body 13 includes:

taking a preset number of inner probe array elements 17 in the in-pipe probe body 13 as a sectional scanning inner probe matrix and performing inner probe sectional scanning on the slurry 12 by using the sectional scanning inner probe matrix sequentially, until the ultrasonic circumferential scanning on the slurry 12 is performed by using the in-pipe probe body 13;

in each inner probe sectional scanning, configuring all of the inner probe array elements in the in-pipe probe body 13 to simultaneously transmit ultrasonic signals to the slurry, and then switching all of the inner probe array elements in the in-pipe probe body 13 to be in the ultrasonic reception state to receive the ultrasonic reflection signals and generate ultrasonic inner probe sectional scanning reflection signals; and

generating the slurry ultrasonic reflection circumferential scanning information during the ultrasonic circumferential scanning based on all of the ultrasonic inner probe sectional scanning reflection signals.

When the in-pipe probe body 13 includes a plurality of inner probe array elements 17, the plurality of inner probe array elements 17 are circumferentially distributed in the in-pipe probe body 13, and the number of the inner probe array elements 17 in the in-pipe probe body 13 may be consistent with that of the outer probe array elements 11 in the annular outer probe 4, or less than the number of the outer probe array elements 11 in the annular outer probe 4. The specific number may be selected as required so that the ultrasonic circumferential scanning can be performed by using the in-pipe probe body 13.

The in-pipe probe body 13 includes the plurality of inner probe array elements 17, and the ultrasonic circumferential scanning is performed independently by using the in-pipe probe body 13, which is similar to the ultrasonic circumferential scanning performed independently by using the annular outer probe 4. For example, selecting the preset number of inner probe array elements 17 as the sectional scanning inner probe matrix, and performing inner probe sectional scanning based on the sectional scanning inner probe matrix. The method for forming the sectional scanning inner probe matrix and the method for performing the ultrasonic circumferential scanning based on the sectional scanning inner probe matrix, can refer to the number of the above-mentioned annular outer probes 4, which will not be repeated herein.

Different from the annular outer probe 4 described above, when the in-pipe probe body 13 is used to independently perform ultrasonic circumferential scanning, only the ultrasonic inner probe sectional scanning reflection signal is formed in each inner probe sectional scanning. When all of the inner probe array elements 17 receive the ultrasonic reflection signals, one ultrasonic in-pipe sectional scanning reflection signal may be formed based on all of the ultrasonic reflection signals through the foregoing beamforming method.

Similar to the annular outer probe 4 described above, M ultrasonic inner probe sectional scanning reflection signals may be formed after the ultrasonic circumferential scanning, wherein M is the number of the inner probe array elements 17 in the in-pipe probe body 13. Certainly, similar to the embodiment in which there is only one inner probe array element 17 in the in-pipe probe body 13, the two-dimensional grayscale image may be reconstructed and generated by using the slurry ultrasonic reflection circumferential scanning information, and the method for generating the two-dimensional grayscale image and function of the two-dimensional grayscale image may refer to the above description, which will not be repeated here.

FIG. 12 shows an embodiment in which the in-pipe probe body 13 includes a plurality of inner probe array elements 17. In FIG. 12, the inner probe array elements 17 are circumferentially distributed in an inner probe housing 16, and the circumferential distribution may refer to the description that the outer probe array elements 11 are circumferentially distributed in the outer probe housing 10. However, different from the annular outer probe 4, the inner probe housing 16 may be closed in the middle. The method for performing the ultrasonic circumferential detection by using the in-pipe probe body 13 may be consistent with the method for performing the ultrasonic circumferential detection by using the annular outer probe 4, and for details, refer to the foregoing descriptions.

In FIG. 9 and FIG. 10, the in-pipe probe body 13 is assembled in the slurry conveying pipe through an inner probe mounting frame, wherein

the inner probe mounting frame includes a container 14 for accommodating the in-pipe probe body 13 and a group of supporting brackets distributed on an outer wall of the container 14,

the group of supporting brackets includes a plurality of uniformly distributed supporting brackets 15, and the supporting brackets 14 are contacted with an inner wall of the slurry conveying pipe, so that the container 14 and the in-pipe probe body 13 are assembled in the slurry conveying pipe.

FIG. 11 shows an embodiment of the inner probe mounting frame. The container 14 is cylindrical, and the group of support brackets includes three uniformly distributed support brackets 15. Certainly, the inner probe mounting frame may be implemented in other forms so that the in-pipe probe body 13 can be assembled in the slurry conveying pipe. The in-pipe probe body 13 in FIG. 9 and FIG. 10 may be one of the above-mentioned in-pipe probe bodies 13. For example, when the in-pipe probe body 13 has a circumferential rotation capability, the in-pipe probe body 13 may rotates circumferentially in the container 14. Certainly, the container 14 must not affect the transmission and reception of ultrasonic waves.

In a specific implementation, a probe cable may be led out from the support brackets 15 and connected to an external ultrasonic system. In addition, the container 14 needs to be filled with a medium to expel air, and the medium may be water or silicone oil, which is not limited herein.

It can be seen from the above description that regardless of the form of the in-pipe probe body 13, it is impossible to use the annular outer probe 4 to receive the transmission signal. However, the in-pipe probe body 13 can receive the reflection signal reflected by the slurry 12. In a specific implementation, only one in-pipe probe body 13 is selected and configured in the slurry conveying pipe. That is, a manner in which the inner probe array elements 17 are circumferentially distributed may be selected, or a manner in which one inner probe array element 17 can rotate circumferentially may be selected.

In an embodiment of the present application, when performing the ultrasonic circumferential scanning based on the annular outer probe 4 and the in-pipe probe body 13, configuring the annular outer probe 4 and the in-pipe probe body 13 by the detection control processor to perform bidirectional alternating circumferential scanning, so as to generate the slurry ultrasonic transmission circumferential scanning information and the slurry ultrasonic reflection circumferential scanning information after the bidirectional alternating circumferential scanning, wherein

in the bidirectional alternating circumferential scanning, configuring each of the annular outer probe 4 and the in-pipe probe body 13 to be in an ultrasonic primary scanning state, and configuring each of the in-pipe probe body 13 and the annular outer probe 4 to be in an ultrasonic auxiliary scanning state, wherein
the ultrasonic primary scanning state includes at least an ultrasonic transmission state and an ultrasonic auxiliary reception state, and the ultrasonic auxiliary scanning state includes at least an ultrasonic primary reception state;
configuring the annular outer probe 4 to be in the ultrasonic primary scanning state, and configuring the in-pipe probe body 13 to be in the ultrasonic auxiliary scanning state, so as to perform the outer probe sectional scanning by using the sectional scanning outer probe matrix, wherein
in each outer probe sectional scanning, configuring the sectional scanning outer probe matrix to transmit an ultrasonic signal, and receiving an ultrasonic transmission signal by the in-pipe probe body 13 in the ultrasonic auxiliary scanning state, so as to generate an inner probe ultrasonic sectional scanning transmission signal;
switching the sectional scanning outer probe matrix transmitting the ultrasonic signal to the ultrasonic reception state to generate an outer probe ultrasonic sectional scanning reflection signal based on an received ultrasonic signal;
after the ultrasonic circumferential scanning described above, generating inner probe ultrasonic scanning transmission information based on all of the inner probe ultrasonic sectional scanning transmission signals, and generating outer probe ultrasonic scanning reflection information based on all of the outer probe ultrasonic sectional scanning reflection signals;
configuring the annular outer probe 4 to be in the ultrasonic auxiliary scanning state, and configuring the in-pipe probe body 13 to be in the ultrasonic primary scanning state, so as to perform the inner probe sectional scanning by using the in-pipe probe body 13, wherein
in each inner probe sectional scanning, configuring the sectional scanning inner probe matrix to transmit the ultrasonic signal, and receiving an ultrasonic transmission signal by the annular outer probe 4 in the ultrasonic auxiliary scanning state, so as to generate an outer probe ultrasonic sectional scanning transmission signal;
configuring each of sectional scanning inner probe matrices transmitting ultrasonic signals to be in the ultrasonic reception state to generate an inner probe ultrasonic sectional scanning reflection signal based on the received ultrasonic signal;
after the ultrasonic circumferential scanning described above, generating outer probe ultrasonic scanning transmission information based on all of the outer probe ultrasonic sectional scanning transmission signals, and generating inner probe ultrasonic scanning reflection information based on all of the inner probe ultrasonic sectional scanning reflection signals;
generating the slurry ultrasonic transmission circumferential scanning information based on the inner probe ultrasonic scanning transmission information and the outer probe ultrasonic scanning transmission information;
generating the slurry ultrasonic reflection circumferential scanning information based on the outer probe ultrasonic scanning reflection information and the inner probe ultrasonic scanning reflection information.

When the ultrasonic probe unit includes both the annular outer probe 4 and the in-pipe probe body 13, the inner probe array elements 17 and the outer probe array elements 11 are coplanar, which means that all of the inner probe array elements 17 and all of the outer probe array elements 11 are in a coplanar distribution state. In addition, when the ultrasonic probe unit includes both of the annular outer probe 4 and the in-pipe probe body 13, the annular outer probe 4 and the in-pipe probe body 13 can be used to perform the ultrasonic circumferential scanning simultaneously. The ultrasonic circumferential scanning performed by both of the annular outer probe 4 and the in-pipe probe body 13 is the bidirectional alternating circumferential scanning.

In the bidirectional alternating circumferential scanning, the annular outer probe 4 and the in-pipe probe body 13 are respectively configured to be in the ultrasonic primary scanning state, which means that each of the annular outer probe 4 and the in-pipe probe body 13 is configured to be in the ultrasonic primary scanning state at least once. Meanwhile, the in-pipe probe body 13 and the annular outer probe 4 are respectively configured to be in the ultrasonic auxiliary scanning state, which means that each of the in-pipe probe body 13 and the annular outer probe 4 is configured to be in the ultrasonic auxiliary scanning state at least once. Specifically, when the annular outer probe 4 is configured in the ultrasonic primary scanning state, the in-pipe probe body 13 needs to be configured in the ultrasonic auxiliary scanning state. Certainly, when the in-pipe probe body 13 is configured in the ultrasonic primary scanning state, the annular outer probe 4 needs to be configured in the ultrasonic auxiliary scanning state. An order in which the annular outer probe 4 and the in-pipe probe body 13 are configured to enter the ultrasonic primary scanning state may be selected as required.

Specifically, the ultrasonic primary scanning state at least includes an ultrasonic transmission state and an ultrasonic auxiliary reception state, and the ultrasonic auxiliary scanning state at least includes an ultrasonic primary reception state. For example, when the annular outer probe 4 is in the ultrasonic transmission state of the ultrasonic primary scanning state and the in-pipe probe body 13 is in the ultrasonic primary reception state, the annular outer probe 4 is used to transmit an ultrasonic signal during the ultrasonic circumferential scanning, and the in-pipe probe body 13 receives a transmission signal during the ultrasonic circumferential scanning. Thus, the transmission signal is received by the in-pipe probe body 13, which is different from that in the ultrasonic circumferential scanning performed by the annular outer probe 4. Certainly, the annular outer probe 4 may be switched to the ultrasonic reception state after transmitting the ultrasonic signal, that is, enters the ultrasonic auxiliary reception state of the ultrasonic primary scanning state.

Similarly, when the in-pipe probe body 13 is in the ultrasonic transmission state of the ultrasonic primary scanning state and the annular outer probe 4 is in the ultrasonic primary reception state, the in-pipe probe body 13 is used to transmit ultrasonic signals during the ultrasonic circumferential scanning, and the annular outer probe 4 receives ultrasonic signals, i.e., transmission signals, during the ultrasonic circumferential scanning. Meanwhile, the in-pipe probe body 13 may also be used to receive reflection signals.

Regarding an operational method when the annular outer probe 4 is in the ultrasonic transmission state, reference may be made to the description of the outer probe sectional scanning performed by the annular outer probe 4. A process of bidirectional alternating circumferential scanning will be described below by taking the in-pipe probe body 13 having a plurality of inner probe array elements 17 as an example.

From the above description, when the annular outer probe 4 is in the ultrasonic transmission state of the ultrasonic primary scanning state, for each outer probe sectional scanning, the in-pipe probe body 13 in the ultrasonic primary reception state is used to receive the ultrasonic transmission signal to generate the inner probe ultrasonic sectional scanning transmission signal. In a specific implementation, the outer probe sectional scanning, that is, the sectional scanning when the annular outer probe 4 is used for the ultrasonic circumferential detection, performed in cooperation with the in-pipe probe body 13 may be consistent with the above description, except that the transmission signal is received by the in-pipe probe body 13.

When the in-pipe probe body 13 is used to receive the ultrasonic transmission signal, similar to that in the above focusing scanning mode, an inner probe array element 17 in the in-pipe probe body 13 directly corresponding to a sectional scanning outer probe matrix is selected to receive the transmission signal. At this time, an inner probe ultrasonic sectional scanning transmission signal in the current outer probe sectional scanning is formed.

When the annular outer probe 4 receives the reflection signal, all of the outer probe array elements 11 in the annular outer probe 4 may be configured to be in the ultrasonic reception state. At this time, each of the outer probe array elements 11 are used to receive the reflection signal, and an outer probe ultrasonic sectional scanning reflection signal is obtained by using the foregoing beamforming method. Therefore, in each outer probe sectional scanning, an inner probe ultrasonic sectional scanning transmission signal and an outer probe ultrasonic sectional scanning reflection signal corresponding thereto may be obtained.

When the in-pipe probe body 13 is in the ultrasonic tramission state of the ultrasonic primary scanning state, in each inner probe sectional scanning, the annular outer probe 4 in the ultrasonic primary reception state is used to receive the ultrasonic transmission signal to generate an outer probe ultrasonic sectional scanning transmission signal. In a specific implementation, regarding the inner probe sectional scanning performed by the in-pipe probe body 13, reference may be made to the above description. For each inner probe sectional scanning, an outer probe array element 11 in the annular outer probe 4 that is adapted to the sectional scanning inner probe matrix is configured to be in the ultrasonic reception state to receive the transmission signal, and an outer probe ultrasonic sectional scanning transmission signal is generated based on the ultrasonic transmission signal to be received. The outer probe array element 11 adapted to the sectional scanning inner probe matrix may be an outer probe array element 11 directly corresponding to the sectional scanning inner probe matrix, or an outer probe array element 11 obtained by selecting an array element for receiving a transmission signal in the above-mentioned focusing scanning mode. Specifically, the outer probe array element 11 may be selected so that the transmission signal can be effectively received and the outer probe ultrasonic sectional scanning transmission signal can be generated.

After the ultrasonic signal is transmitted by the sectional scanning inner probe matrix, all of the inner probe array elements 17 in the in-pipe probe body 13 may be in the ultrasonic reception state to receive reflection signals. At this time, beamforming is performed on all of the reflection signals, and thus an inner probe ultrasonic sectional scanning reflection signal may be formed.

In a specific implementation, in the bidirectional alternating circumferential scanning, the annular outer probe 4 is firstly configured to be in the ultrasonic primary scanning state. At this time, the in-pipe probe body 13 is in the ultrasonic auxiliary scanning state. After the ultrasonic circumferential scanning is performed by the annular outer probe 4, the in-pipe probe body 13 is configured to be in the ultrasonic primary scanning state. At this time, the annular outer probe 4 is in the ultrasonic auxiliary scanning state until the ultrasonic circumferential scanning is performed or completed by the in-pipe probe body 13. Also, the in-pipe probe body 13 may be firstly configured to be in the ultrasonic primary scanning state, and then the annular outer probe 4 is configured to be in the ultrasonic primary scanning state, and a specific sequence may be selected as required.

It can be seen from the above description that, since both of the annular outer probe 4 and the in-pipe probe body 13 need to be in the ultrasonic primary scanning state and the ultrasonic auxiliary scanning state, when both of the annular outer probe 4 and the in-pipe probe body 13 are used to perform the ultrasonic circumferential scanning, the slurry ultrasonic transmission circumferential scanning information is generated based on all of the inner probe ultrasonic sectional scanning transmission signals in the ultrasonic primary scanning state of the annular outer probe 4, and based on all of the outer probe ultrasonic sectional scanning transmission signals in the ultrasonic primary scanning state of the in-pipe probe body 13. Meanwhile, the slurry ultrasonic reflection circumferential scanning information may be formed based on the inner probe ultrasonic sectional scanning reflection signals and the outer probe ultrasonic sectional scanning reflection signals.

In a specific implementation, a flowing speed of the slurry 12 in the slurry conveying pipe is slow, which is much lower relative to a time for performing the ultrasonic circumferential scanning by using the ultrasonic probe unit. That is, when performing the ultrasonic circumferential scanning, although there is a process sectional detection, it can still be equivalent to performing ultrasonic detection on the slurry 12 in the same area. Thus, the ultrasonic detection on the slurry 12 can be implemented through the ultrasonic circumferential scanning performed on the slurry 12 in the focusing scanning mode by using the annular outer probe 4 alone, or through the bidirectional alternating circumferential scanning performed by a cooperation of the annular outer probe 4 and the in-pipe probe body 13. Based on a position relationship between the in-pipe probe body 13 and the slurry 12, when quality state detection on the slurry 12 is performed through the bidirectional alternating circumferential scanning based on the slurry ultrasonic reflection circumferential scanning information and the slurry ultrasonic transmission circumferential scanning information, an influence of the pipe wall of the slurry conveying pipe can be reduced, and a precision and reliability of quality state detection can be improved.

Further, considering a strong reflection signal of the array element near region (near field) of the ultrasonic probe, and a weak reflection signal of the array element region far away from the ultrasonic probe (far field) caused by a serious attenuation phenomenon of the slurry 12 on the ultrasonic energy, information of a far field region may not be detected by using the two-dimensional grayscale image reconstructed based on such reflection signals. However, in the bidirectional alternating circumferential scanning, the two two-dimensional grayscale images are ultimately fused together. By combining high-quality near-field signals from the annular outer probe 4 and the in-pipe probe body 13 for imaging, a weakness of a far-field reflection signal caused by attenuation can be well solved, and meanwhile, the image resolution of the two-dimensional grayscale image is improved.

It can be seen from the above description that only the transmission signals in the planar scanning mode can be used to reconstruct and generate the two-dimensional grayscale image. However, the transmission signals in the focusing scanning mode may not be used to generate the two-dimensional grayscale image, and the reflection signals in the focusing scanning mode may be used to generate the two-dimensional grayscale image.

In an embodiment of the present application, when the quality state detection on the slurry 12 is performed based on the slurry ultrasonic transmission circumferential scanning information and the slurry ultrasonic reflection circumferential scanning information, a method of the quality state detection includes:

sequentially extracting the ultrasonic outer probe sectional scanning transmission signals in slurry ultrasonic transmission circumferential scanning information, and sequentially extracting the ultrasonic outer probe sectional scanning reflection signals in slurry ultrasonic reflection circumferential scanning information, wherein the ultrasonic outer probe sectional scanning transmission signals correspond to the ultrasonic outer probe sectional scanning reflection signals;

calculating reflection PPV values of the ultrasonic outer probe sectional scanning reflection signals to be extracted, and transmission PPV values and transmission TOF values of the ultrasonic outer probe sectional scanning transmission signals to be extracted ;

when a reflection PPV is less than a reflection PPV threshold and a transmission PPV is greater than a transmission PPV threshold, determining that the slurry is qualified; otherwise, determining that an impurity exists in the slurry 12;

when the impurity exists in the slurry 12 and a transmission TOF is greater than a transmission TOF threshold, the impurity is a substance in which sound velocity is lower than that in the slurry 12; otherwise, the impurity is a substance in which sound velocity is higher than that in the slurry 12.

When the quality state detection on the slurry 12 is performed, the slurry ultrasonic transmission circumferential scanning information and the slurry ultrasonic reflection circumferential scanning information are generated at least based on the annular outer probe 4. As described above, the slurry ultrasonic transmission circumferential scanning information and the slurry ultrasonic reflection circumferential scanning information may be generated by the annular outer probe 4 independently in the focusing scanning mode, or the slurry ultrasonic transmission circumferential scanning information and the slurry ultrasonic reflection circumferential scanning information may be generated by the annular outer probe 4 in the bidirectional alternating circumferential scanning.

For the slurry ultrasonic transmission circumferential scanning information and the slurry ultrasonic reflection circumferential scanning information independently generated by the annular outer probe 4 in the focusing scanning mode, during the quality state detection, the ultrasonic outer probe sectional scanning transmission signals may be sequentially extracted from the slurry ultrasonic transmission circumferential scanning information, and the ultrasonic outer probe sectional scanning reflection signals may be sequentially extracted from the slurry ultrasonic reflection circumferential scanning information. That is, during the quality state detection, at least the ultrasonic outer probe sectional scanning transmission signals and the ultrasonic outer probe sectional scanning reflection signals need to be extracted. Wherein, the ultrasonic outer probe sectional scanning transmission signals correspond to the ultrasonic outer probe sectional scanning reflection signals, and the correspondence means that an ultrasonic outer probe sectional scanning transmission signal and an ultrasonic outer probe sectional scanning reflection signal are generated in the same outer probe sectional scanning. For the specific method and process of the generation under the same outer probe sectional scanning, reference may be made to the above description, which will not be repeated here.

Based on the ultrasonic outer probe sectional scanning reflection signals to be extracted, the reflection PPV (Peak-to-Peak Voltage) value of the ultrasonic outer probe sectional scanning reflection signal is calculated. The PPV value is calculated by subtracting the amplitude of the minimum waveform point from the amplitude of the maximum waveform point of the ultrasonic outer probe sectional scanning reflection signal. Therefore, the reflection PPV value may be calculated by using technical means commonly used in this technical field after the ultrasonic outer probe sectional scanning reflection signals are extracted.

Based on the ultrasonic outer probe sectional scanning transmission signals to be extracted,, the transmission PPV value and the transmission TOF value of the ultrasonic outer probe sectional scanning transmission signal are calculated. Regarding a method for calculating the transmission PPV value, reference may be made to the above description of the reflection PPV value. The transmission TOF (time of flight) value, that is, a flight time of the ultrasonic outer probe sectional scanning transmission signal, means a time elapsed from transmission to reception of the signal. As shown in FIG. 17, a position of a vibration starting point is detected, the time corresponding to the position is the TOF value, and the transmission TOF value may be calculated according to a number of sampling points and current sampling frequency of an acquisition card. Therefore, TOF=the number of the sampling points/the sampling frequency, and thus the flight time of the ultrasonic outer probe sectional scanning transmission signal may be calculated by multiplying the number of the sampling points for automatically detecting the transmission signals by the time required by the acquisition card to acquire each of the sampling points.

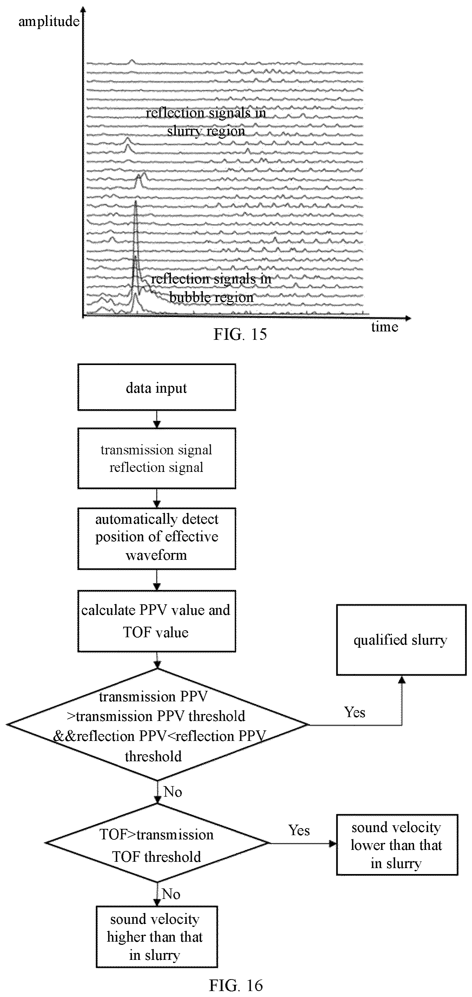

After the reflection PPV value, the transmission PPV value and the transmission TOF value are calculated, the quality state detection on the slurry 12 may be performed through the method shown in FIG. 16. The reflective PPV threshold, the transmissive PPV threshold, and the transmissive TOF threshold shown are specifically related to the type of the slurry 12 and the diameter size of the slurry conveying pipe where the slurry 12 is located.

Considering an interference of the circuit in the actual environment, when the acquisition card acquires signals, some interference of clutter signals with strong intensity may occur, and these clutter signals often follow a waveform of an effective transmission signal. As shown in FIG. 17, in order to improve the accuracy of the PPV value, for the ultrasonic outer probe sectional scanning transmission signal, it is necessary to set a sampling gate to intercept a length of the effective signal from the overall signal, and calculate the PPV transmission value within the length of the effective signal. Specifically,

calculation of the transmission PPV value of the ultrasonic outer probe sectional scanning transmission signal includes:
performing band-pass filtering on the ultrasonic outer probe sectional scanning transmission signal;
determining a position of a vibration starting point of the ultrasonic outer probe sectional scanning transmission signal;
setting a sampling gate based on the position of the vibration starting point to be determined, wherein the position of the vibration starting point is taken as a starting position of the sampling gate, and a position obtained by intercepting a preset waveform length backwards from the position of the vibration starting point is taken as an ending position of the sampling gate; and
intercepting the ultrasonic probe sectional scanning transmission signal based on the sampling gate to be set to obtain a sampling signal, and calculating a corresponding transmission PPV value based on the sampling signal.

In a specific implementation, it is necessary to perform the band-pass filtering on the ultrasonic outer probe sectional scanning transmission signal to filter out noise signals. The band-pass filtering may be in a form of an existing common FIR type band-pass filtering.

The position of the vibration starting point of the ultrasonic outer probe sectional scanning transmission signal is automatically detected after the band-pass filtering, as shown in FIG. 17. A variance estimation algorithm may be used to detect the position of the vibration starting point. Since a variance value of data in a plateau region is relatively small and a variance value of data in a fluctuation region is relatively large, all data may be divided into a plurality of segments with equal length, which may be set as a waveform length. The variance value of each segment of the data is calculated, and a variance value of a first segment of the data is used as a reference value. If the variance value of a subsequent segment of the data is greater than a certain multiple of the reference value, such as 1.5 times, a center point of the segment of data is recorded as the position of the vibration starting point. Certainly, the position of the vibration starting point may also be determined in other manners.

After the position of the vibration starting point is determined, the position of the vibration starting point is regarded as a start position of the sampling gate, and and a position several waveform lengths away from the vibration starting point backward is regarded as the ending position of the sampling gate, which may usually be set to 5-10 waveform lengths, that is, a preset number of wavelengths may be 5-10 waveform lengths. The waveform length is equal to the sampling frequency divided by the transmission frequency.

After front and rear positions of the sampling gate are determined, that is, after the sampling gate is determined, the ultrasonic outer probe sectional scanning transmission signal is intercepted to obtain the sampling signal, and the corresponding transmission PPV value is calculated based on the sampling signal. The time corresponding to the vibration starting point is the transmission TOF value. In a specific implementation, when calculating each of transmission PPV values, the above calculation steps need to be performed, that is, the position of the vibration starting point needs to be calculated.

The reflection PPV threshold, the transmission PPV threshold, and the transmission TOF threshold may be calculated in a manner commonly used in the technical field, which are usually empirical values. For example, selecting a quality qualified slurry 12, performing completely the same ultrasonic circumferential scanning on the qualified slurry 12, and calculating a reflection PPV value, a transmission PPV value, and a transmission TOF value corresponding to the quality qualified slurry 12 as standard values, and setting the reflection PPV threshold, the transmission PPV threshold, and the transmission TOF threshold according to the standard values based on a precision requirement for ultrasonic detection on the slurry 12. Certainly, these standard values of the slurry may be directly used as thresholds. Alternatively, in order to improve algorithm robustness, the thresholds may be obtained by multiplying these standard values of the slurry by different coefficients . For example, the reflection PPV threshold is equal to 1.2 times of the standard value of the reflection PPV, and the transmission PPV threshold is equal to 0.8 times of the standard value of the transmission PPV. Certainly, the reflection PPV threshold, the transmission PPV threshold and the transmission TOF threshold may also be set in other manners, which are not enumerated herein.

When the ultrasonic wave passes through different media, strong reflection occurs at an interface. A reflection signal is weak in the same uniform medium. If the reflection signal is strong, the transmission signal is weakened. Therefore, if the ultrasonic wave encounters impurities, the reflection signal at this position is strong, and meanwhile, the transmission signal is weakened, as shown in FIG. 15. A propagation speed of the ultrasonic wave in the slurry 12 is different from that in the impurities, as shown in FIG. 14. Thus, a relationship between sound velocities in the impurities and the slurry 12 may be determined based on a relationship between the transmission TOF value and the TOF threshold.

In a specific implementation, spectrum information of the ultrasonic outer probe sectional scanning transmission signal may further be extracted. In a frequency domain, an attenuation amplitude of a signal at each frequency point varies when passing through different impurity regions. A comparison of the spectrum with the transmission signal of the standard slurry may be used to determine whether there are impurities and the types of impurities.

In an embodiment of the present application, a method for performing a quality state detection on the slurry based on slurry ultrasonic transmission circumferential scanning information and slurry ultrasonic reflection circumferential scanning information, includes:

extracting inner probe ultrasonic sectional scanning transmission signals in the inner probe ultrasonic scanning transmission information, and sequentially extracting outer probe ultrasonic sectional scanning reflection signals in the outer probe ultrasonic scanning reflection information, wherein the inner probe ultrasonic sectional scanning transmission signals correspond to the outer probe ultrasonic sectional scanning reflection signals;

calculating reflection PPV values of the outer probe ultrasonic sectional scanning reflection signals to be extracted, and transmission PPV values and transmission TOF values of the inner probe ultrasonic sectional scanning transmission signals to be extracted;

when a reflection PPV is less than a reflection PPV threshold and a transmission PPV is greater than a transmission PPV threshold, determining that the slurry is qualified; otherwise, determining that an impurity exists in the slurry 12; and

when the impurity exists in the slurry 12 and a transmission TOF is greater than a transmission TOF threshold, the impurity is a substance in which sound velocity is lower than that in the slurry 12; otherwise, the impurity is a substance in which sound velocity is higher than that in the slurry 12.

It can be seen from the above description that when the annular outer probe 4 and the in-pipe probe body 13 are used to perform the bidirectional alternating circumferential scanning, there will be inner probe ultrasonic sectional scanning transmission signals, outer probe ultrasonic sectional scanning reflection signals, outer probe ultrasonic sectional scanning transmission signals and inner probe ultrasonic sectional scanning reflection signals. When the quality state detection is performed on the slurry 12, the inner probe ultrasonic sectional scanning transmission signals and the outer probe ultrasonic sectional scanning reflection signals may be used as a group of detection signals, or the outer probe ultrasonic sectional scanning transmission signals and the inner probe ultrasonic sectional scanning reflection signals may be used as a group of detection signals.

When the inner probe ultrasonic sectional scanning transmission signals and the outer probe ultrasonic sectional scanning reflection signals are used as a group of detection signals, the inner probe ultrasonic sectional scanning transmission signals corresponds to the outer probe ultrasonic sectional scanning reflection signals, which means that the inner probe ultrasonic sectional scanning transmission signals and the outer probe ultrasonic sectional scanning reflection signals are generated in the same outer probe sectional scanning, and reference may be made to the foregoing descriptions for a specific generation manner and process.

The reflection PV value, the transmission PV value and the transmission TOF value may be calculated for the inner probe ultrasonic sectional scanning transmission signals and the outer probe ultrasonic sectional scanning reflection signals, and reference may be made to the foregoing description. At this time, the quality state detection on the slurry 12 may be performed with reference to FIG. 16 and the above description, which is not repeated here.

In an embodiment of the present application, a method for performing a quality state detection on a slurry based on slurry ultrasonic transmission circumferential scanning information and slurry ultrasonic reflection circumferential scanning information includes:

extracting the outer probe ultrasonic sectional scanning transmission signals in outer probe ultrasonic scanning transmission information, and sequentially extracting the inner probe ultrasonic sectional scanning reflection signals in inner probe ultrasonic scanning reflection information, wherein the outer probe ultrasonic sectional scanning transmission signals correspond to the inner probe ultrasonic sectional scanning reflection signals;

calculating reflection PPV values of the inner probe ultrasonic sectional scanning reflection signals to be extracted and transmission PPV values and transmission TOF values of the outer probe ultrasonic sectional scanning transmission signals to be extracted;

when a reflection PPV is less than a reflection PPV threshold and a transmission PPV is greater than a transmission PPV threshold, determining that the slurry is qualified; otherwise, determining that an impurity exists in the slurry;

when the impurity exists in the slurry and a transmission TOF is greater than a transmission TOF threshold, the impurity is a substance in which sound velocity is lower than that in the slurry, otherwise, the impurity is a substance in which sound velocity is higher than that in the slurry.

As described above, when the inner probe ultrasonic sectional scanning transmission signals and the outer probe ultrasonic sectional scanning reflection signals are used as a group of detection signals, and the quality state detection is performed on the slurry 12, the outer probe ultrasonic sectional scanning transmission signals and the inner probe ultrasonic sectional scanning reflection signal may also be used as a group of detection signals for performing the quality state detection on the slurry 12.

That the outer probe ultrasonic sectional scanning transmission signals corresponds to the inner probe ultrasonic sectional scanning reflection signals specifically means that the outer probe ultrasonic sectional scanning transmission signals and the inner probe ultrasonic sectional scanning reflection signals are generated in the same inner probe sectional scanning. For a specific generation manner and process, reference may be made to the foregoing descriptions.

The reflection PPV value, the transmission PPV value and the transmission TOF value may be calculated for the inner probe ultrasonic sectional scanning transmission signals and the outer probe ultrasonic sectional scanning reflection signals, and reference may be made to the foregoing description. At this time, the quality state detection on the slurry 12 may be performed with reference to FIG. 16 and the above description, which is not repeated here.

FIG. 13 shows an embodiment in which the ultrasonic probe unit is configured by the detection control processor to perform the ultrasonic circumferential scanning. As shown, the detection control processor includes a host machine 18, a PCIE card 19, an FPGA unit 20, a switching device 21, and a control device 26. The host machine 18 may be an existing common computer, and used to control a whole ultrasonic detection such as the foregoing selection of a scanning mode and the specific quality state detection.

The host machine 18 is connected to the FPGA unit through the PCIE card 19. The switching device 21 is mainly used for realizing a switching control of the ultrasonic transmission state and the ultrasonic reception state, and the switching device 21 may be in a form of a common switching control circuit and the like. The switching device 21 is adaptively connected to an outer probe transmission circuit 22, an outer probe reception circuit 23, an inner probe transmission circuit 24 and an inner probe reception circuit 25, and thus the switching control of the ultrasonic transmission state and the ultrasonic receiving state may be achieved. The FPGA unit 20 may perform beamforming on original reflection signals to be received, and upload a beamformed data to the host machine 18 through the PCIE card 19. A transmission signal data to be received is directly uploaded to the host machine 18 through the PCIE card 19 and further processed by the host machine 18. In a specific implementation, the FPGA unit 20 and the PCIE card 19 may be in other common forms in the technical field. For example, the FPGA unit 20 may be other micro-processing chips, and a form of the micro-processing chips may be selected as required, so that the whole ultrasonic detection can be performed, which will not be described herein.

The control device 26 may control an operation of the in-pipe probe body 13, such as supplying power to the in-pipe probe body 13. The control device 26 is connected to the host machine 18, which cooperates with the FPGA unit 20 and the switching device 21, so that a whole ultrasonic circumferential scanning and the quality detection on the slurry 12 can be performed, and the two-dimensional grayscale image can be generated.

To sum up, in an ultrasonic detection method for preparing slurry 12, ultrasonic scanning is performed on the slurry 12 flowing through the slurry conveying pipe by using the ultrasonic detection system described above to detect the quality state of the slurry 12.

Specifically, for the manner and process of performing the ultrasonic scanning on the slurry 12 by using the ultrasonic detection system to detect the quality state of the slurry 12, reference may be made to the above description, and details are not described herein again.

**Claims**

1. A slurry quality detection system, **characterized by** comprising:

   an ultrasonic probe unit, comprising at least an annular outer probe capable of being sleeved on a slurry conveying pipe and/or an in-pipe probe body assembled in the slurry conveying pipe, wherein

   the annular outer probe comprises a plurality of outer probe array elements capable of receiving and transmitting ultrasonic signals, and the outer probe array elements are circumferentially distributed inside the annular outer probe,
   the in-pipe probe body comprises at least one inner probe array element capable of receiving and transmitting ultrasonic signals, and

   a detection control processor electrically connected to the ultrasonic probe unit and configured with ultrasonic probe array elements to perform ultrasonic circumferential scanning on slurry in the slurry conveying pipe, wherein

   performing the ultrasonic circumferential scanning on the slurry based on the annular outer probe and/or the in-pipe probe body; generating slurry ultrasonic transmission circumferential scanning information and/or slurry ultrasonic reflection circumferential scanning information after the ultrasonic circumferential scanning on the slurry is performed; and
   detecting a quality state of the slurry based on the slurry ultrasonic transmission circumferential scanning information and the slurry ultrasonic reflection circumferential scanning information when the slurry ultrasonic transmission circumferential scanning information and the slurry ultrasonic reflection circumferential scanning information are generated at least based on the annular outer probe, and outputting the quality state of the slurry.

**2.** The slurry quality detection system according to claim 1, **characterized in that** generating a two-dimensional grayscale image of the slurry based on the slurry ultrasonic transmission circumferential scanning information or the slurry ultrasonic reflection circumferential scanning information, after the quality state of the slurry is output.

**3.** The slurry quality detection system according to claim 1, **characterized in that** normal lines of the outer probe array elements inside the annular outer probe each points to a center inside the slurry conveying pipe;

in the ultrasonic circumferential scanning using the annular outer probe, taking a preset number of the outer probe array elements inside the annular outer probe as a sectional scanning outer probe matrix and performing outer probe sectional scanning on the slurry by using the sectional scanning outer probe matrix sequentially, until the ultrasonic circumferential scanning on the slurry is performed by using the annular outer probe, wherein

in each outer probe sectional scanning, configuring all of the outer probe array elements in the sectional scanning outer probe matrix to simultaneously transmit ultrasonic signals to the slurry, and configuring corresponding ones of the outer probe array elements inside the annular outer probe to be in an ultrasonic reception state based on a preset scanning mode, so as to at least receive an ultrasonic transmission signal and generate an ultrasonic outer probe sectional scanning transmission signal; and generating the slurry ultrasonic transmission circumferential scanning information during the ultrasonic circumferential scanning based on all of the ultrasonic outer probe sectional scanning transmission signals.

**4.** The slurry quality detection system according to claim 3, **characterized in that** the preset scanning mode comprises a focusing scanning mode and a planar scanning mode;

in the outer probe sectional scanning on the slurry, configuring corresponding ones of the outer probe array elements inside the annular outer probe to be in the ultrasonic reception state based on the focusing scanning mode or the planar scanning mode, wherein

when receiving an ultrasonic signal based on the focusing scanning mode, configuring outer probe array elements in the sectional scanning outer probe matrix and one outer probe array element opposite to the sectional scanning outer probe matrix to be in the ultrasonic reception state, wherein

using all of the outer probe array elements in the sectional scanning outer probe matrix to simultaneously receive ultrasonic reflection signals, and generating ultrasonic outer probe sectional scanning reflection signals based on the ultrasonic reflection signals to be received;

generating the slurry ultrasonic reflection circumferential scanning information during the ultrasonic circumferential scanning based on all of the ultrasonic outer probe sectional scanning reflection signals; and

receiving the ultrasonic transmission signal based on the one outer probe array element opposite to the sectional scanning outer probe matrix, and generating the ultrasonic outer probe sectional scanning transmission signal based on the ultrasonic transmission signal to be received.

**5.** The slurry quality detection system according to claim 4, **characterized in that** when receiving the ultrasonic signal based on the planar scanning mode, configuring at least an outer probe array element directly corresponding to the sectional scanning outer probe matrix to be in the ultrasonic reception state, so as to receive the ultrasonic transmission signal by using the outer probe array element in the ultrasonic reception state, and generate the ultrasonic outer probe sectional scanning transmission signal, wherein

in each outer probe sectional scanning, a number of outer probe array elements in the ultrasonic reception state is consistent with that of outer probe array elements in the sectional scanning outer probe matrix, and the outer probe array elements in the ultrasonic reception state are in one-to-one correspondence with outer probe array elements transmitting ultrasonic signals in the sectional scanning outer probe matrix.

**6.** The slurry quality detection system according to claim 3, **characterized in that** the in-pipe probe body comprises only one inner probe array element, and when performing the ultrasonic circumferential detection based on the in-pipe probe body, configuring the in-pipe probe body to perform circumferential rotation in the slurry conveying pipe so as to perform the ultrasonic circumferential detection based on the circumferential rotation of the in-pipe probe body, wherein

driving the in-pipe probe body to rotate at a preset angle until the circumferential rotation of the in-pipe probe body is performed in the slurry conveying pipe;

after each rotation, configuring the in-pipe probe body to perform inner probe sectional scanning, wherein in the inner probe sectional scanning, configuring the in-pipe probe body to transmit the ultrasonic signal, and switching to the ultrasonic reception state after transmitting the ultrasonic signal, so as to receive an ultrasonic reflection signal and generate an ultrasonic inner probe sectional scanning reflection signal by using the in-pipe probe body; and

generating the slurry ultrasonic reflection circumferential scanning information during the ultrasonic circumferential scanning based on all of the ultrasonic inner probe sectional scanning reflection signals.

7. The slurry quality detection system according to claim 3, **characterized in that** the in-pipe probe body comprises a plurality of inner probe array elements circumferentially distributed inside the in-pipe probe body, and the ultrasonic circumferential detection performed based on the in-pipe probe body comprises:

taking a preset number of inner probe array elements inside the in-pipe probe body as an sectional scanning inner probe matrix and performing inner probe sectional scanning on the slurry by using the sectional scanning inner probe matrix sequentially, until the ultrasonic circumferential scanning on the slurry is performed by using the in-pipe probe body;

in each inner probe sectional scanning, configuring all of inner probe array elements in the sectional scanning inner probe matrix to simultaneously transmit ultrasonic signals to the slurry, and then switching all of the inner probe array elements in the in-pipe probe matrix to be in the ultrasonic reception state to receive ultrasonic reflection signals and generate ultrasonic inner probe sectional scanning reflection signals; and

generating the slurry ultrasonic reflection circumferential scanning information during the ultrasonic circumferential scanning based on all of the ultrasonic inner probe sectional scanning reflection signals.

8. The slurry quality detection system according to claim 7, **characterized in that** when performing the ultrasonic circumferential scanning based on the annular outer probe and the in-pipe probe body, configuring the annular outer probe and the in-pipe probe body by the detection control processor to perform bidirectional alternating circumferential scanning, so as to generate the slurry ultrasonic transmission circumferential scanning information and the slurry ultrasonic reflection circumferential scanning information after the bidirectional alternating circumferential scanning, wherein

in the bidirectional alternating circumferential scanning, configuring each the annular outer probe and the in-pipe probe body to be in an ultrasonic primary scanning state, and configuring each the in-pipe probe body and the annular outer probe to be in an ultrasonic auxiliary scanning state, wherein

the ultrasonic primary scanning state comprises at least an ultrasonic transmission state and an ultrasonic auxiliary reception state, and the ultrasonic auxiliary scanning state comprises at least an ultrasonic primary reception state;

configuring the annular outer probe to be in the ultrasonic primary scanning state, and configuring the in-pipe probe body to be in the ultrasonic auxiliary scanning state, so as to perform the outer probe sectional scanning by using the sectional scanning outer probe matrix, wherein

in each outer probe sectional scanning, configuring the sectional scanning outer probe matrix to transmit the ultrasonic signal, and receiving an ultrasonic transmission signal by the in-pipe probe body in the ultrasonic auxiliary scanning state, so as to generate an inner probe ultrasonic sectional scanning transmission signal;

switching the sectional scanning outer probe matrix transmitting the ultrasonic signal to the ultrasonic reception state to generate an outer probe ultrasonic sectional scanning reflection signal based on an received ultrasonic signal;

after the ultrasonic circumferential scanning, generating inner probe ultrasonic scanning transmission information based on all of the inner probe ultrasonic sectional scanning transmission signals, and generating outer probe ultrasonic scanning reflection information based on all of the outer probe ultrasonic sectional scanning reflection signals;

configuring the annular outer probe to be in the ultrasonic auxiliary scanning state, and configuring the in-pipe probe body to be in the ultrasonic primary scanning state, so as to perform the inner probe sectional scanning by using the in-pipe probe body, wherein

in each inner probe sectional scanning, configuring the sectional scanning inner probe matrix to transmit the ultrasonic signal, and receiving an ultrasonic transmission signal by the annular outer probe in the ultrasonic auxiliary scanning state, so as to generate an outer probe ultrasonic sectional scanning transmission signal;

configuring each of sectional scanning inner probe matrices transmitting the ultrasonic signal to be in the ultrasonic reception state to generate an inner probe ultrasonic sectional scanning reflection signal based on the received ultrasonic signal;

after the ultrasonic circumferential scanning, generating outer probe ultrasonic scanning transmission information based on all of the outer probe ultrasonic sectional scanning transmission signals, and generating inner probe ultrasonic scanning reflection information based on all of the inner probe ultrasonic sectional scanning reflection signals;

generating the slurry ultrasonic transmission circumferential scanning information based on the inner probe ultrasonic scanning transmission information and the outer probe ultrasonic scanning transmission information; and

generating the slurry ultrasonic reflection circumferential scanning information based on the outer probe ultrasonic scanning reflection information and the inner probe ultrasonic scanning reflection information.

9. The slurry quality detection system according to any one of claims 3-7, **characterized in that** a method of the quality state detection on the slurry based on the slurry ultrasonic transmission circumferential scanning information and the slurry ultrasonic reflection circumferential scanning information comprises:

sequentially extracting the ultrasonic outer probe sectional scanning transmission signals in the slurry ultrasonic transmission circumferential scanning information, and sequentially extracting the ultrasonic outer probe sectional scanning reflection signals in the slurry ultrasonic reflection circumferential scanning information, wherein the ultrasonic outer probe sectional scanning transmission signals correspond to the ultrasonic outer probe sectional scanning reflection signals;

calculating reflection PPV values of the ultrasonic outer probe sectional scanning reflection signals to be extracted, and transmission PPV values and transmission TOF values of the ultrasonic outer probe sectional scanning transmission signals to be extracted;

when a reflection PPV is less than a reflection PPV threshold and a transmission PPV is greater than a transmission PPV threshold, determining that the slurry is qualified; otherwise, determining that an impurity exists in the slurry; and when the impurity exists in the slurry and a transmission TOF is greater than a transmission TOF threshold, the impurity is a substance in which sound velocity is lower than that in the slurry, otherwise, the impurity is a substance in which sound velocity is higher than that in the slurry.

10. The slurry quality detection system according to claim 8, **characterized in that** a method of the quality state detection on the slurry based on the slurry ultrasonic transmission circumferential scanning information and the slurry ultrasonic reflection circumferential scanning information comprises:

extracting inner probe ultrasonic sectional scanning transmission signals in the inner probe ultrasonic scanning transmission information, and sequentially extracting outer probe ultrasonic sectional scanning reflection signals in the outer probe ultrasonic scanning reflection information, wherein the inner probe ultrasonic sectional scanning transmission signals correspond to the outer probe ultrasonic sectional scanning reflection signals;

calculating reflection PPV values of the outer probe ultrasonic sectional scanning reflection signals to be extracted and transmission PPV values and transmission TOF values of the inner probe ultrasonic sectional scanning transmission signals to be extracted;

when a reflection PPV is less than a reflection PPV threshold and a transmission PPV is greater than a transmission PPV threshold, determining that the slurry is qualified; otherwise, determining that an impurity exists in the slurry; and when the impurity exists in the slurry and a transmission TOF is greater than a transmission TOF threshold, the impurity is a substance in which sound velocity is lower than that in the slurry, otherwise, the impurity is a substance in which sound velocity is higher than that in the slurry.

11. The slurry quality detection system according to claim 9, **characterized in that** calculation of a transmission PPV value of an ultrasonic outer probe sectional scanning transmission signal comprises:

performing band-pass filtering on the ultrasonic outer probe sectional scanning transmission signal;

determining a position of a vibration starting point of the ultrasonic outer probe sectional scanning transmission signal;

setting a sampling gate based on the position of the vibration starting point to be determined, wherein the position of the vibration starting point is taken as a starting position of the sampling gate, and a position obtained by intercepting a preset waveform length backwards from the position of the vibration starting point is taken as an ending position of the sampling gate; and intercepting the ultrasonic probe sectional scanning transmission signal based on the sampling gate to be set to obtain a sampling signal, and calculating a corresponding transmission PPV value based on the sampling signal.

12. A slurry quality detection system, **characterized by** comprising:

an ultrasonic probe unit, comprising at least an annular outer probe capable of being sleeved on a slurry conveying pipe and/or an in-pipe probe body assembled in the slurry conveying pipe, wherein

the annular outer probe comprises a plurality of outer probe array elements capable of receiving and transmitting ultrasonic signals, and the outer probe array elements are circumferentially distributed inside the annular outer probe, the in-pipe probe body comprises at least one inner probe array element capable of receiving and transmitting ultrasonic signals, and

a detection control processor electrically connected to the ultrasonic probe unit and configured with ultrasonic probe array elements to perform ultrasonic circumferential scanning on slurry in the slurry conveying pipe, wherein

performing the ultrasonic circumferential scanning on the slurry based on the annular outer probe and/or the in-pipe probe body; generating slurry ultrasonic transmission circumferential scanning information and/or slurry ultrasonic reflection circumferential scanning information after the ultrasonic circumferential scanning on the slurry is performed; detecting a quality state of the slurry based on the slurry ultrasonic transmission circumferential scanning information and the slurry ultrasonic reflection circumferential scanning information when the slurry ultrasonic transmission circumferential scanning information and the slurry ultrasonic reflection circumferential scanning information are generated at least based on the annular outer probe, and outputting the quality state of the slurry; and generating a two-dimensional grayscale image of the slurry based on the slurry ultrasonic transmission circumferential scanning information or the slurry ultrasonic reflection circumferential scanning information.

13. The slurry quality detection system according to claim 12, **characterized in that** normal lines of the outer probe array elements inside the annular outer probe each points to a center inside the slurry conveying pipe;

in the ultrasonic circumferential scanning using the annular outer probe, taking a preset number of the outer probe array elements inside the annular outer probe as a sectional scanning outer probe matrix and performing outer probe sectional scanning on the slurry by using the sectional scanning outer probe matrix sequentially, until the ultrasonic circumferential scanning on the slurry is performed by using the annular outer probe, wherein in each outer probe sectional scanning, configuring all of the outer probe array elements in the sectional scanning outer probe matrix to simultaneously transmit ultrasonic signals to the slurry, and configuring corresponding ones of the outer probe array elements inside the annular outer probe to be in an ultrasonic reception state based on a preset scanning mode, so as to at least receive an ultrasonic transmission signal and generate an ultrasonic outer probe sectional scanning transmission signal; and generating the slurry ultrasonic transmission circumferential scanning information during the ultrasonic circumferential scanning based on all of the ultrasonic outer probe sectional scanning transmission signals.

14. The slurry quality detection system according to claim 13, **characterized in that** the preset scanning mode comprises a focusing scanning mode and a planar scanning mode;

in the outer probe sectional scanning on the slurry, configuring corresponding ones of the outer probe array elements inside the annular outer probe to be in the ultrasonic reception state based on the focusing scanning mode or the planar scanning mode, wherein when receiving an ultrasonic signal based on the focusing scanning mode, configuring outer probe array elements in the sectional scanning outer probe matrix and one outer probe array element opposite to the sectional scanning outer probe matrix to be in the ultrasonic reception state, wherein

using all of the outer probe array elements in the sectional scanning outer probe matrix to simultaneously receive ultrasonic reflection signals, and generating ultrasonic outer probe sectional scanning reflection signals based on the received ultrasonic reflection signals;

generating the slurry ultrasonic reflection circumferential scanning information during the ultrasonic circumferential scanning based on all of the ultrasonic outer probe sectional scanning reflection signals; and

receiving the ultrasonic transmission signal based on the one outer probe array element opposite to the sectional scanning outer probe matrix, and generating an ultrasonic outer probe sectional scanning transmission signal based on the ultrasonic transmission signal to be received.

15. The slurry quality detection system according to claim 14, **characterized in that** when receiving the ultrasonic signal based on the planar scanning mode, configuring at least an outer probe array element directly corresponding to the sectional scanning outer probe matrix to be in the ultrasonic reception state, so as to receive the ultrasonic transmission signal by using the outer probe array element in the ultrasonic reception state, and generate the ultrasonic outer probe sectional scanning transmission signal, wherein

in each outer probe sectional scanning, a number of outer probe array elements in the ultrasonic reception state is consistent with that of outer probe array elements in the sectional scanning outer probe matrix, and the outer probe array elements in the ultrasonic reception state are in one-to-one correspondence with outer probe array elements transmitting ultrasonic signals in the sectional scanning outer probe matrix.

16. The slurry quality detection system according to claim 13, **characterized in that** the in-pipe probe body comprises only one inner probe array element, and when performing the ultrasonic circumferential detection based on the in-pipe probe body, configuring the in-pipe probe body to perform circumferential rotation in the slurry conveying pipe so as to perform the ultrasonic circumferential detection based on the circumferential rotation of the in-pipe probe body, wherein

driving the in-pipe probe body to rotate at a preset angle until the circumferential rotation of the in-pipe probe body is performed in the slurry conveying pipe;

after each rotation, configuring the in-pipe probe body to perform inner probe sectional scanning, wherein in the inner probe sectional scanning, configuring the in-pipe probe body to transmit an ultrasonic signal, and switching to the ultrasonic reception state after transmitting the ultrasonic signal, so as to receive an ultrasonic reflection signal and generate an ultrasonic inner probe sectional scanning reflection signal by using the in-pipe probe body; and

generating the slurry ultrasonic reflection circumferential scanning information during the ultrasonic circumferential scanning based on all of the ultrasonic inner probe sectional scanning reflection signals.

17. The slurry quality detection system according to claim 13, **characterized in that** the in-pipe probe body comprises a plurality of inner probe array elements circumferentially distributed inside the in-pipe probe body, and the ultrasonic circumferential detection performed based on the in-pipe probe body comprises:

taking a preset number of inner probe array elements inside the in-pipe probe body as an sectional scanning inner probe matrix and performing inner probe sectional scanning on the slurry by using the sectional scanning inner probe matrix sequentially, until the ultrasonic circumferential scanning on the slurry is performed by using the in-pipe probe body;

in each inner probe sectional scanning, configuring all of inner probe array elements in the sectional scanning inner probe matrix to simultaneously transmit ultrasonic signals to the slurry, and then switching all of the inner probe array elements in the in-pipe probe matrix to be in the ultrasonic reception state to receive ultrasonic reflection signals and generate ultrasonic inner probe sectional scanning reflection signals; and

generating the slurry ultrasonic reflection circumferential scanning information during the ultrasonic circumferential scanning based on all of the ultrasonic inner probe sectional scanning reflection signals.

18. The slurry quality detection system according to claim 17, **characterized in that** when performing the ultrasonic circumferential scanning based on the annular outer probe and the in-pipe probe body, configuring the annular outer probe and the in-pipe probe body by the detection control processor to perform bidirectional alternating circumferential scanning, so as to generate the slurry ultrasonic transmission circumferential scanning information and the slurry ultrasonic reflection circumferential scanning information after the bidirectional alternating circumferential scanning, wherein

in the bidirectional alternating circumferential scanning, configuring each the annular outer probe and the in-pipe probe body to be in an ultrasonic primary scanning state, and configuring each the in-pipe probe body and the annular outer probe to be in an ultrasonic auxiliary scanning state, wherein

the ultrasonic primary scanning state comprises at least an ultrasonic transmission state and an ultrasonic auxiliary reception state, and the ultrasonic auxiliary scanning state comprises at least an ultrasonic primary reception state;

configuring the annular outer probe to be in the ultrasonic primary scanning state, and configuring the in-pipe probe body to be in the ultrasonic auxiliary scanning state, so as to perform the outer probe sectional scanning by using the sectional scanning outer probe matrix, wherein

in each outer probe sectional scanning, configuring the sectional scanning outer probe matrix to transmit an ultrasonic signal, and receiving an ultrasonic transmission signal by the in-pipe probe body in the ultrasonic auxiliary scanning state, so as to generate an inner probe ultrasonic sectional scanning transmission signal;

switching the sectional scanning outer probe matrix transmitting the ultrasonic signal to the ultrasonic reception state to generate an outer probe ultrasonic sectional scanning reflection signal based on an received ultrasonic signal;

after the ultrasonic circumferential scanning, generating inner probe ultrasonic scanning transmission information based on all of the inner probe ultrasonic sectional scanning transmission signals, and generating outer probe ultrasonic scanning reflection information based on all of the outer probe ultrasonic sectional scanning reflection signals;

configuring the annular outer probe to be in the ultrasonic auxiliary scanning state, and configuring the in-pipe probe body to be in the ultrasonic primary scanning state, so as to perform an inner probe sectional scanning by using the in-pipe probe body, wherein

in each inner probe sectional scanning, configuring the sectional scanning inner probe matrix to transmit an ultrasonic signal, and receiving an ultrasonic transmission signal by the annular outer probe in the ultrasonic auxiliary scanning state, so as to generate an outer probe ultrasonic sectional scanning transmission signal;

configuring each of sectional scanning inner probe matrices transmitting the ultrasonic signal to be in the ultrasonic reception state to generate an inner probe ultrasonic sectional scanning reflection signal based on the received ultrasonic signal;

after the ultrasonic circumferential scanning, generating outer probe ultrasonic scanning transmission information based on all of the outer probe ultrasonic sectional scanning transmission signals, and generating inner probe ultrasonic scanning reflection information based on all of the inner probe ultrasonic sectional scanning reflection signals;

generating the slurry ultrasonic transmission circumferential scanning information based on the inner probe ultrasonic scanning transmission information and the outer probe ultrasonic scanning transmission information; and

generating the slurry ultrasonic reflection circumferential scanning information based on the outer probe ultrasonic scanning reflection information and the inner probe ultrasonic scanning reflection information.

19. The slurry quality detection system according to any one of claims 13-17, **characterized in that** a method of the quality state detection on the slurry based on the slurry ultrasonic transmission circumferential scanning information and the slurry ultrasonic reflection circumferential scanning information comprises:

sequentially extracting the ultrasonic outer probe sectional scanning transmission signals in the slurry ultrasonic transmission circumferential scanning information, and sequentially extracting the ultrasonic outer probe sectional scanning reflection signals in the slurry ultrasonic reflection circumferential scanning information, wherein the ultrasonic outer probe sectional scanning transmission signals correspond to the ultrasonic outer probe sectional scanning reflection signals;

calculating reflection PPV values of the ultrasonic outer probe sectional scanning reflection signals to be extracted, and transmission PPV values and transmission TOF values of the ultrasonic outer probe sectional scanning transmission signals to be extracted;

when a reflection PPV is less than a reflection PPV threshold and a transmission PPV is greater than a transmission PPV threshold, determining that the slurry is qualified; otherwise, determining that an impurity exists in the slurry; and

when the impurity exists in the slurry and a transmission TOF is greater than a transmission TOF threshold, the impurity is a substance in which sound velocity is lower than that in the slurry, otherwise, the impurity is a substance in which sound velocity is higher than that in the slurry.

**20.** The slurry quality detection system according to claim 18, **characterized in that** a method of the quality state detection on the slurry based on the slurry ultrasonic transmission circumferential scanning information and the slurry ultrasonic reflection circumferential scanning information comprises:

extracting inner probe ultrasonic sectional scanning transmission signals in the inner probe ultrasonic scanning transmission information, and sequentially extracting outer probe ultrasonic sectional scanning reflection signals in the outer probe ultrasonic scanning reflection information, wherein the inner probe ultrasonic sectional scanning transmission signals correspond to the outer probe ultrasonic sectional scanning reflection signals;

calculating reflection PPV values of the outer probe ultrasonic sectional scanning reflection signals to be extracted and transmission PPV values and transmission TOF values of the inner probe ultrasonic sectional scanning transmission signals to be extracted;

when a reflection PPV is less than a reflection PPV threshold and a transmission PPV is greater than a transmission PPV threshold, determining that the slurry is qualified; otherwise, determining that an impurity exists in the slurry; and when the impurity exists in the slurry and a transmission TOF is greater than a transmission TOF threshold, the impurity is a substance in which sound velocity is lower than that in the slurry, otherwise, the impurity is a substance in which sound velocity is higher than that in the slurry.

**21.** The slurry quality detection system according to claim 19, **characterized in that** calculation of a transmission PPV value of an ultrasonic outer probe sectional scanning transmission signal comprises:

performing band-pass filtering on the ultrasonic outer probe sectional scanning transmission signal;

determining a position of a vibration starting point of the ultrasonic outer probe sectional scanning transmission signal;

setting a sampling gate based on the the position of the vibration starting point to be determined, wherein the position of the vibration starting point is taken as a starting position of the sampling gate, and a position obtained by intercepting a preset waveform length backwards from the position of the vibration starting point is taken as an ending position of the sampling gate; and

intercepting the ultrasonic probe sectional scanning transmission signal based on the sampling gate to be set to obtain a sampling signal, and calculating a corresponding transmission PPV value based on the sampling signal.

annular probe

FIG. 1

detect quality of slurry according
to ultrasonic echo signal

bubbles exist?

Yes

secondary defoaming
process

No

proceed to next processing step

FIG. 2

FIG. 3

FIG. 4

FIG. 5

FIG. 6

FIG. 7

FIG. 8

FIG. 9

FIG. 10

FIG. 11

FIG. 12

18 — host machine

19 — PCIE card

20 — FPGA unit

21 — switching device

24 — transmission circuit / reception circuit — 25

22 — transmission circuit / 23 — reception circuit

10 — slurry

26 — control device

FIG. 13

amplitude

transmission signals
in slurry region

transmission signals
in bubble region

transmission signals
in slurry region

time

FIG. 14

amplitude

reflection signals in
slurry region

reflection signals in
bubble region

time

FIG. 15

```
┌─────────────────────┐
│     data input      │
└─────────────────────┘
           │
           ▼
┌─────────────────────┐
│ transmission signal │
│  reflection signal  │
└─────────────────────┘
           │
           ▼
┌─────────────────────┐
│ automatically detect│
│ position of effective│
│     waveform        │
└─────────────────────┘
           │
           ▼
┌─────────────────────┐
│ calculate PPV value │
│    and TOF value    │
└─────────────────────┘
           │
           ▼
```

transmission PPV
>transmission PPV threshold
&&reflection PPV<reflection PPV
threshold

Yes → qualified slurry

No

TOF>transmission
TOF threshold

Yes → sound velocity
lower than that
in slurry

No

sound velocity
higher than that
in slurry

FIG. 16

FIG. 17

FIG. 18

FIG. 19

## INTERNATIONAL SEARCH REPORT

| International application No. |
| --- |
| **PCT/CN2024/110761** |

**A. CLASSIFICATION OF SUBJECT MATTER**

G01N29/02(2006.01)i; G01N29/22(2006.01)i

According to International Patent Classification (IPC) or to both national classification and IPC

**B. FIELDS SEARCHED**

Minimum documentation searched (classification system followed by classification symbols)

IPC: G01N

Documentation searched other than minimum documentation to the extent that such documents are included in the fields searched

Electronic data base consulted during the international search (name of data base and, where practicable, search terms used)

CNTXT, ENTXTC, ENTXT, DWPI, CNKI: 无锡领声, 金程, 曲荣召, 超声, 空化, 气泡, 杂质, 灰阶, 灰度, 流体, 液体, 浆, 管, 环, 内, 外, 透射, 反射, ultrasound, air, bubbles, impurity, gray, fluid, liquid, pulp, slurry, tube, ring, inside, out, transmission, reflect+

**C. DOCUMENTS CONSIDERED TO BE RELEVANT**

| Category* | Citation of document, with indication, where appropriate, of the relevant passages | Relevant to claim No. |
| --- | --- | --- |
| X | CN 105973752 A (UNIVERSITY OF SHANGHAI FOR SCIENCE AND TECHNOLOGY) 28 September 2016 (2016-09-28) description, paragraphs [0005]-[0054], and figures 1-6 | 1-5, 12-15 |
| Y | CN 105973752 A (UNIVERSITY OF SHANGHAI FOR SCIENCE AND TECHNOLOGY) 28 September 2016 (2016-09-28) description, paragraphs [0005]-[0054], and figures 1-6 | 1-7, 12-17 |
| Y | CN 110487912 A (TSINGHUA UNIVERSITY) 22 November 2019 (2019-11-22) description, paragraphs [0005]-[0068], and figures 1-4 | 1-7, 12-17 |
| A | CN 106102588 A (SHENZHEN MINDRAY BIO-MEDICAL ELECTRONICS CO., LTD.) 09 November 2016 (2016-11-09) entire document | 1-21 |
| A | CN 106461618 A (ONTARIO POWER GENERATION INC) 22 February 2017 (2017-02-22) entire document | 1-21 |
| A | JP 2004279144 A (HITACHI LTD.) 07 October 2004 (2004-10-07) entire document | 1-21 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 December 2024** | **26 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/110761** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2016341586 A1 (HURMUZLU, Yildirim et al.) 24 November 2016 (2016-11-24)<br>entire document | 1-21 |

Form PCT/ISA/210 (second sheet) (July 2022)

**INTERNATIONAL SEARCH REPORT**
**Information on patent family members**

International application No.

**PCT/CN2024/110761**

| Patent document cited in search report | | | Publication date (day/month/year) | Patent family member(s) | | | Publication date (day/month/year) |
|---|---|---|---|---|---|---|---|
| CN | 105973752 | A | 28 September 2016 | CN | 105973752 | B | 01 October 2019 |
| CN | 110487912 | A | 22 November 2019 | None | | | |
| CN | 106102588 | A | 09 November 2016 | US | 2018192988 | A1 | 12 July 2018 |
| | | | | US | 2023380795 | A1 | 30 November 2023 |
| | | | | US | 12004898 | B2 | 11 June 2024 |
| | | | | WO | 2017035838 | A1 | 09 March 2017 |
| CN | 106461618 | A | 22 February 2017 | EP | 4386777 | A2 | 19 June 2024 |
| | | | | US | 2019195829 | A1 | 27 June 2019 |
| | | | | US | 10746701 | B2 | 18 August 2020 |
| | | | | WO | 2015089667 | A1 | 25 June 2015 |
| | | | | KR | 20160101081 | A | 24 August 2016 |
| | | | | KR | 102053800 | B1 | 09 December 2019 |
| | | | | CA | 2934164 | A1 | 25 June 2015 |
| | | | | CA | 2934164 | C | 08 October 2019 |
| | | | | EP | 3084419 | A1 | 26 October 2016 |
| | | | | EP | 3084419 | B1 | 12 June 2024 |
| | | | | CA | 3038334 | A1 | 25 June 2015 |
| | | | | CA | 3038334 | C | 16 January 2024 |
| | | | | US | 2016327520 | A1 | 10 November 2016 |
| | | | | US | 10261053 | B2 | 16 April 2019 |
| JP | 2004279144 | A | 07 October 2004 | JP | 3861833 | B2 | 27 December 2006 |
| US | 2016341586 | A1 | 24 November 2016 | EP | 3298357 | A1 | 28 March 2018 |
| | | | | WO | 2016187285 | A1 | 24 November 2016 |
| | | | | US | 2017160117 | A1 | 08 June 2017 |
| | | | | CA | 3021770 | A1 | 24 November 2016 |
| | | | | CA | 3021770 | C | 12 January 2021 |
| | | | | US | 9612145 | B2 | 04 April 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220155262 A